# EUROPEAN PATENT APPLICATION

(11) **EP 4 660 582 A1**
(43) Date of publication of application: **10.12.2025**
(21) Application number: 24810402.8
(22) Date of filing: 22.05.2024
(51) Int. Cl.: G01C 21/00

(54) **NAVIGATION METHOD AND SYSTEM, AND RELATED DEVICE**

(30) Priority: 24.05.2023 CN 202310593462
(71) Applicant: Huawei Technologies Co., Ltd., Shenzhen, Guangdong 518129 (CN)
(72) Inventor: LUO, Wentao, Shenzhen, Guangdong 518129 (CN); LI, Xiaosong, Shenzhen, Guangdong 518129 (CN); WANG, Yaoyuan, Shenzhen, Guangdong 518129 (CN); ZHANG, Ziyang, Shenzhen, Guangdong 518129 (CN); ZHOU, Shunbo, Shenzhen, Guangdong 518129 (CN); HU, Yanbin, Shenzhen, Guangdong 518129 (CN)
(74) Representative: Goddar, Heinz J.
(86) International application number: PCT/CN2024/094574
(87) International publication number: WO 2024/240161

(57) **Abstract**

This application provides a navigation method and system, and a related device. The method includes the following steps: A navigation system obtains a plurality of images by photographing a first scene from a plurality of capture angles, determines a first aerial view and a first surround view of the first scene based on the plurality of images, determines first angle information and first motion information based on the first aerial view, the first surround view, and a navigation target, finally adjusts a capture angle based on the first angle information, and moves toward the navigation target based on the first motion information, so that the navigation system can continue to capture a new image based on an adjusted capture angle, to obtain new capture angle information and new motion information. The rest may be deduced by analogy, until a location indicated by the navigation target is reached. The navigation system can sense all-round environment information from front, rear, left, right, and top view angles and the like, to accurately and quickly determine a navigation result, so as to avoid problems of repeated exploration, collision, and low efficiency.

## Description

This application claims priority to Chinese Patent Application No. 202310593462.8, filed with the China National Intellectual Property Administration on May 24, 2023 and entitled "NAVIGATION METHOD AND SYSTEM, AND RELATED DEVICE", which is incorporated herein by reference in its entirety.

### TECHNICAL FIELD

This application relates to the field of artificial intelligence (artificial intelligence, AI), and in particular, to a navigation method and system, and a related device.

### BACKGROUND

Rapid development and popularization of fields such as self-driving navigation, robot navigation, and uncrewed aerial vehicle navigation promote continuous exploration and innovation of navigation technologies. A conventional navigation technology is usually map-based navigation, and map data needs to be prepared and loaded in advance, greatly occupying a memory. In addition, when an environment changes, the map data needs to be updated again, causing a limitation on flexibility of a navigation system. Therefore, a mapless navigation technology emerges. The mapless navigation technology is an environment sensing-based navigation manner implemented by using various sensors and algorithms. In this manner, map information does not need to be loaded in advance, so that memory resources can be saved. In addition, when an environment changes, navigation and obstacle avoidance can also be performed. This technology has high flexibility and adaptability, and is usually applied to fields such as self-driving, robot navigation, uncrewed aerial vehicle navigation, and a smart household.

However, in a current mapless navigation technology, only information about an environment that is within a front field of view can be sensed. In this case, a robot needs to run for a period of time before finding a navigation route. Consequently, problems of repeated exploration, easy collision, and low efficiency exist.

### SUMMARY

This application provides a navigation method and system, and a related device, to resolve problems of repeated exploration, easy collision, and low efficiency of mapless navigation after a robot runs for a period of time.

According to a first aspect, a navigation method is provided, and the method includes the following steps: A motion apparatus obtains a plurality of first images, where the plurality of first images are a plurality of images obtained when the motion apparatus indicates an image sensor to photograph a first scene from a plurality of capture angles. A processing apparatus determines a first aerial view and a first surround view of the first scene based on the plurality of first images. The processing apparatus determines first angle information and first motion information based on the first aerial view, the first surround view, and a navigation target, where the first angle information indicates the image sensor to adjust a capture angle, and the first motion information indicates a device on which the motion apparatus is located to move toward the navigation target.

The method described in the first aspect is implemented. A plurality of images at different capture angles are obtained by rotating the image sensor, an aerial view and a surround view are obtained based on the plurality of images, then angle information and motion information are determined based on the aerial view, the surround view, and the navigation target, a subsequent capture angle of the image sensor is adjusted based on the angle information, and a device on which a navigation system is located is indicated, based on the motion information, to move toward the navigation target, so that the image sensor can continue to capture a new image based on an adjusted capture angle, to obtain new capture angle information and new motion information. The rest may be deduced by analogy, until a location indicated by the navigation target is reached. In this way, a map does not need to be loaded in advance in an entire navigation process, memory resources are saved, and flexibility is high. In addition, the navigation system can sense all-round environment information from front, rear, left, right, and top view angles and the like, and the device can directly find a navigation path, to avoid problems of repeated exploration, collision, and low efficiency.

In a possible implementation, the plurality of first images are a plurality of images obtained by changing the capture angle by the image sensor, and the image sensor rotates with the device to change the capture angle; or the device includes a base, and the image sensor rotates with the base to change the capture angle.

For example, assuming that the motion apparatus is deployed on a robot, the image sensor (for example, a camera) may be mounted on a head of the robot, and a plurality of images at different angles of view are obtained by rotating the head of the robot; or the image sensor is mounted on a rotatable base at the bottom of the robot, and when the robot does not rotate, the base may be rotated to enable the image sensor to rotate along the base to photograph an image, to obtain a plurality of images at a plurality of different angles of view. For another example, assuming that the motion apparatus is deployed on a self-driving vehicle, the image sensor (for example, a camera) may be mounted on a rotatable bracket in the self-driving vehicle, so that the image sensor can photograph an image with rotation of the bracket, to obtain a plurality of images at a plurality of different angles of view. For another example, a robotic vacuum cleaner may also have a rotatable base and a built-in camera, and photograph an image with rotation of the base, to obtain a plurality of images at different angles of view. It should be understood that the foregoing examples are used for description. This is not specifically limited in this application.

In the foregoing implementation, the image sensor rotates with the base to change the capture angle. A width of the rotatable base on which the image sensor is located may be less than a maximum width of the robot. In this case, when the robot enters narrow space or a dead end environment, the robot cannot rotate due to a limitation of an obstacle. The base on which the image sensor is located is rotated to obtain a rear field of view of the robot, to avoid a problem of a navigation failure caused by the robot being stuck in a dead corner.

In a possible implementation, the processing apparatus inputs the first surround view and the first aerial view into a navigation model, to obtain the first angle information and the first motion information, where the navigation model includes a feature extraction network and an inference network, the feature extraction network includes a first network and a second network, the first network is configured to generate a first feature based on the first surround view, the second network is configured to generate a second feature based on the first surround view and the first aerial view, and the inference network is configured to obtain the first angle information and the first motion information based on the first feature, the second feature, and the navigation target.

In the foregoing implementation, inference is performed based on the first surround view and the first aerial view, so that a navigation system can not only sense information about an environment that is within a front field of view, but also sense information about an environment at rear, left, right, and top view angles, and comprehensively sense information about an environment around the device (for example, a robot) on which the motion apparatus is located, so that the device on which the motion apparatus is located can directly find the navigation path, to avoid problems of repeated exploration, collision, and low efficiency.

In a possible implementation, the first network includes a first encoder of a first autoencoder network, input data of the first encoder includes the first surround view, and the first feature is an output result of the first encoder; and the second network includes a decoder of the first autoencoder network, an encoder of a second autoencoder network, and a decoder of the second autoencoder network, the second feature is an output result of the second decoder, and input data of the second network includes the first feature and the first aerial view.

In the foregoing implementation, the first feature is a feature extracted by the first network from the surround view. In comparison with an original surround view, the first feature may exclude noise or other redundant information. Extracting a visual feature of the aerial view based on the first feature can not only make information included in the second feature more comprehensive, but also improve efficiency and accuracy of extracting the second feature.

In a possible implementation, in the second network, an output end of the first decoder is connected to an input end of the second encoder, an output end of the second encoder is connected to an input end of the second decoder, input data of the first decoder includes the first feature, and input data of the second encoder includes an output result of the first decoder and the first aerial view.

In the foregoing implementation, the surround view is input into the first encoder of the first network, the first encoder outputs the obtained first feature, and the first feature is input into the first decoder of the second network to obtain the output result of the first decoder. Then, the output result of the first decoder and the aerial view are input into the second encoder of the second network to obtain an output result of the second encoder. Then, the output result of the second encoder is input into the second decoder, and the second decoder outputs the obtained second feature. In this manner, the first feature and the aerial view are used as the input data of the second network, so that a finally extracted second feature can have more abundant surround-view information and aerial information, and a decision obtained through inference based on the feature is more accurate.

In a possible implementation, the first decoder includes a plurality of first convolution layers, the second encoder includes a plurality of second convolution layers, and output results of the first convolution layers are sequentially input into the second convolution layers in a sequence of convolution layers.

For example, the first decoder includes three convolution layers that are sequentially L11, L12, and L13, and the second encoder includes three convolution layers that are sequentially L21, L22, and L23. In this case, an output result of L11 is input into L21, an output result of L12 is input into L22, and an output result of L13 is input into L23. It should be understood that the foregoing example is used for description. This is not specifically limited in this application.

It should be understood that, an output result of each first convolution layer of the first decoder is input into each convolution layer of the second encoder, so that the second encoder can fully extract image features in the surround view and the aerial view. Information about the extracted feature is refined by using a plurality of convolution layers, so that an image with noise and deformation can be better processed, higher robustness is achieved, and a decision obtained through inference based on the feature is more accurate.

In a possible implementation, the processing apparatus determines the first angle information and the first motion information based on the first aerial view, the first surround view, the navigation target, and sensing information, where the sensing information includes information collected by another sensor different from the image sensor, and the another sensor includes one or more of a location sensor, an acceleration sensor, a gyroscope sensor, a geomagnetic sensor, an infrared sensor, an IMU, an odometer, an angular velocity sensor, or a linear velocity sensor.

Optionally, a plurality of pieces of sensing information further include information obtained from a third-party platform. For example, a weather information service platform may provide data related to weather forecast; a time information service platform may provide current time, date, and holiday information of each country; and a medical institution service platform may provide notification information (for example, a hospital leave notification and information about a newly hired expert) released by each medical institution. The third-party platform may further include another public data platform that can provide information such as traffic planning data, road construction information, traffic flow data, parking lot locations, charging locations, and population census data. Examples are not described herein one by one. A third-party network service platform may be a service platform that provides network data, for example, an instant communication service platform, an online audio and video service platform, an online shopping platform, a logistics tracking platform, a search engine, a map service platform, or a take-out service platform. It should be understood that the foregoing mentioned government public data platform and third-party network service platform are merely used as examples for description, and may be specifically determined based on an actual application scenario. This is not specifically limited in this application.

In the foregoing implementation, the angle information and the motion information are determined based on the aerial view, the surround view, and the sensing information, and a movement direction of the device and a subsequent capture angle are determined by combining a plurality of aspects of information, so that generated navigation information is more accurate.

In a possible implementation, the first motion information includes a movement speed. When adjusting the capture angle of the image sensor based on the first angle information, the motion apparatus moves toward the navigation target at a preset speed. When the capture angle of the image sensor does not need to be adjusted, the motion apparatus moves toward the navigation target at the movement speed.

In the foregoing implementation, the preset speed may be a low speed that can ensure image capturing quality, so that an image captured by the motion apparatus may be a high-quality image, to improve accuracy of subsequent navigation decision-making.

In a possible implementation, the motion apparatus indicates the image sensor to capture a plurality of second images, where the plurality of second images are a plurality of images obtained by photographing a second scene by using one or more target capture angles indicated by the first angle information. The processing apparatus determines a second aerial view and a second surround view of the second scene based on the plurality of second images. The processing apparatus determines second angle information and second motion information based on the second aerial view, the second surround view, and the navigation target, where the second angle information indicates the image sensor to adjust the capture angle, and the second motion information indicates the device on which the motion apparatus is located to move toward the navigation target.

In the foregoing implementation, environment information is periodically collected and periodically received, and inference is performed on the environment information, to obtain the angle information and the motion information. The angle information and the motion information are periodically received, and the angle information and the motion information are processed. Therefore, generated motion information may be angle information and motion information in a periodicity. As the environment information is periodically collected, the generated motion information may be continuously changed. For example, a navigation route may be continuously adjusted to achieve a purpose of real-time navigation, thereby improving stability of the solution.

In a possible implementation, the motion apparatus and the processing apparatus are deployed on a same computing device, and the computing device includes any one of a self-driving vehicle, an uncrewed aerial vehicle, a mobile robot, or a movable smart home appliance; or the motion apparatus is deployed on a first computing device, and the first computing device includes any one of a self-driving vehicle, an uncrewed aerial vehicle, a mobile robot, or a movable smart home appliance; and the processing apparatus is deployed on a second computing device, and the second computing device includes any one of a virtual machine, a bare metal server, or a container.

For example, when the device is a vehicle, the vehicle may capture the plurality of first images at a plurality of angles by rotating a base of a vehicle-mounted camera, to generate the first aerial view and the first surround view, determine the first angle information and the first motion information based on the first aerial view, the first surround view, and the navigation target, then adjust a movement direction and a movement speed based on the first motion information, and move toward the navigation target. In addition, the vehicle adjusts the capture angle of the image sensor based on the first angle information, captures the second image to generate the second aerial view and the second surround view, determines the second angle information and the second motion information based on the second aerial view, the second surround view, and the navigation target, and then continues to move toward the navigation target based on the second motion information. The rest may be deduced by analogy, until the vehicle reaches a destination indicated by the navigation target.

For another example, when the device is a robot, the robot may capture the plurality of first images by rotating the robot or rotating a base of the image sensor, to generate the first aerial view and the first surround view, determine the first angle information and the first motion information based on the first aerial view, the first surround view, and the navigation target, then adjust a movement direction and a movement speed based on the first motion information, and move toward the navigation target. In addition, the robot adjusts the capture angle of the image sensor based on the first angle information, captures the second image to generate the second aerial view and the second surround view, determines the second angle information and the second motion information based on the second aerial view, the second surround view, and the navigation target, and then continues to move toward the navigation target based on the second motion information. The rest may be deduced by analogy, until the robot reaches a destination indicated by the navigation target.

It should be understood that other types of devices such as an uncrewed aerial vehicle and a robotic vacuum cleaner may also implement the solutions described in this application based on the foregoing examples. Examples are not described herein one by one.

In the foregoing implementation, the motion apparatus and the processing apparatus may be deployed on a same device or different devices, and may be flexibly deployed based on a specific application scenario. Therefore, the implementation is applicable to a wide range of scenes.

In a possible implementation, the first feature, the second feature, the sensing information, the navigation target, and historical sensing information in the input data may be fused to obtain a fusion result, and then the fusion result is input into the inference network. In a specific implementation, feature dimensions of the first feature, the second feature, the sensing information, the navigation target, and the historical sensing information may be different. Therefore, the feature dimensions of the first feature, the second feature, the sensing information, the navigation target, and the historical sensing information may be first unified, and dimension reduction processing may be performed on a high-dimensional feature. For example, the second feature is a feature extracted based on the aerial view, and the aerial view is a top view of a two-dimensional plane angle of view. Therefore, the second feature may be a two-dimensional feature. The sensing information is usually a one-dimensional feature. Therefore, compression and dimension reduction need to be performed on the second feature, and then the second feature is spliced and fused with the first feature. In a specific implementation, the second feature may be input into a third autoencoder network, and a second feature obtained through compression and dimension reduction is obtained based on an output result of a third encoder of the third autoencoder network. Certainly, compression and dimension reduction may be performed on the second feature in another manner, so that a data dimension of the second feature is consistent with that of other input data, and feature fusion can be performed. This is not specifically limited in this application.

In the foregoing implementation, feature extraction and encoding are performed on the aerial view and the surround view, so that images, features, and sensing information in different formats can be fused and inferred, to avoid problems, such as poor model calculation efficiency and poor precision, caused by data from a plurality of different sources.

According to a second aspect, a motion apparatus is provided. The motion apparatus is used in a navigation system, the navigation system includes the motion apparatus and a processing apparatus, and the motion apparatus includes: a capture unit, configured to obtain a plurality of first images, where the plurality of first images are a plurality of images obtained by photographing a first scene by an image sensor from a plurality of capture angles, where the capture unit is configured to send the plurality of first images to the processing apparatus; and the capture unit is configured to: receive first angle information sent by the processing apparatus, and indicate, based on the first angle information, the image sensor to adjust a capture angle based on the first angle information; and a motion unit, configured to: receive first motion information sent by the processing apparatus, and indicate, based on the first motion information, a device on which the motion apparatus is located to move toward a navigation target.

The motion apparatus described in the second aspect is implemented. A plurality of images at different capture angles are obtained by rotating the image sensor, and then the images are sent to the processing apparatus, so that the processing apparatus can obtain an aerial view and a surround view based on the plurality of images, and then determine angle information and motion information based on the aerial view, the surround view, and the navigation target. The motion apparatus may adjust a subsequent capture angle of the image sensor based on the angle information, and indicate, based on the motion information, a device on which the navigation system is located to move toward the navigation target, so that the image sensor can continue to capture a new image based on an adjusted capture angle, to obtain new capture angle information and new motion information. The rest may be deduced by analogy, until a location indicated by the navigation target is reached. In this way, a map does not need to be loaded in advance in an entire navigation process, memory resources are saved, and flexibility is high. In addition, the navigation system can sense all-round environment information from front, rear, left, right, and top view angles and the like, and the device can directly find a navigation path, to avoid problems of repeated exploration, collision, and low efficiency.

In a possible implementation, the plurality of first images are a plurality of images obtained by changing the capture angle by the image sensor, and the image sensor rotates with the device to change the capture angle; or the device includes a base, and the image sensor rotates with the base to change the capture angle.

In a possible implementation, the first motion information includes a movement speed. The motion unit is configured to: when adjusting the capture angle of the image sensor based on the first angle information, move toward the navigation target at a preset speed, and the motion unit is configured to: when the capture angle of the image sensor does not need to be adjusted, move toward the navigation target at the movement speed.

In a possible implementation, the capture unit is further configured to indicate the image sensor to capture a plurality of second images, where the plurality of second images are a plurality of images obtained by photographing a second scene by using one or more target capture angles indicated by the first angle information. The capture unit is configured to send the plurality of second images to the processing apparatus. The capture unit is configured to: receive second angle information sent by the processing apparatus, and indicate, based on the second angle information, the image sensor to adjust the capture angle based on the second angle information. The motion unit is configured to: receive second motion information sent by the processing apparatus, and indicate, based on the second motion information, the device on which the motion apparatus is located to move toward the navigation target.

In a possible implementation, the motion apparatus and the processing apparatus are deployed on a same computing device, and the computing device includes any one of a self-driving vehicle, an uncrewed aerial vehicle, a mobile robot, or a movable smart home appliance; or the motion apparatus is deployed on a first computing device, and the first computing device includes any one of a self-driving vehicle, an uncrewed aerial vehicle, a mobile robot, or a movable smart home appliance; and the processing apparatus is deployed on a second computing device, and the second computing device includes any one of a virtual machine, a bare metal server, or a container.

According to a third aspect, a processing apparatus is provided. The processing apparatus is used in a navigation system, the navigation system includes the processing apparatus and a motion apparatus, and the processing apparatus includes: an image processing unit, configured to receive a plurality of first images sent by the motion apparatus, where the plurality of first images are a plurality of images obtained when the motion apparatus indicates an image sensor to photograph a first scene from a plurality of capture angles; and the image processing unit is further configured to determine a first aerial view and a first surround view of the first scene based on the plurality of first images; and a navigation unit, configured to: determine first angle information and first motion information based on the first aerial view, the first surround view, and a navigation target, and send the first angle information and the first motion information to the motion apparatus, where the first angle information indicates the image sensor to adjust a capture angle, and the first motion information indicates a device on which the motion apparatus is located to move toward the navigation target.

The processing apparatus described in the third aspect is implemented. After an aerial view and a surround view that are sent by the motion apparatus are received, the aerial view and the surround view are obtained based on the plurality of images, angle information and motion information are determined based on the aerial view, the surround view, and the navigation target, and then the angle information and the motion information are sent to the motion apparatus. In this way, the motion apparatus can adjust a subsequent capture angle of the image sensor based on the angle information, and indicate, based on the motion information, a device on which the navigation system is located to move toward the navigation target, so that the image sensor can continue to capture a new image based on an adjusted capture angle, to obtain new capture angle information and new motion information. The rest may be deduced by analogy, until a location indicated by the navigation target is reached. In this way, a map does not need to be loaded in advance in an entire navigation process, memory resources are saved, and flexibility is high. In addition, the navigation system can sense all-round environment information from front, rear, left, right, and top view angles and the like, and the device can directly find a navigation path, to avoid problems of repeated exploration, collision, and low efficiency.

In a possible implementation, the plurality of first images are a plurality of images obtained by changing the capture angle by the image sensor, and the image sensor rotates with the device to change the capture angle; or the device includes a base, and the image sensor rotates with the base to change the capture angle.

In a possible implementation, the navigation unit is configured to input the first surround view and the first aerial view into a navigation model, to obtain the first angle information and the first motion information, where the navigation model includes a feature extraction network and an inference network, the feature extraction network includes a first network and a second network, the first network is configured to generate a first feature based on the first surround view, the second network is configured to generate a second feature based on the first surround view and the first aerial view, and the inference network is configured to obtain the first angle information and the first motion information based on the first feature, the second feature, and the navigation target.

In a possible implementation, the first network includes a first encoder of a first autoencoder network, input data of the first encoder includes the first surround view, and the first feature is an output result of the first encoder; and the second network includes a decoder of the first autoencoder network, an encoder of a second autoencoder network, and a decoder of the second autoencoder network, the second feature is an output result of the second decoder, and input data of the second network includes the first feature and the first aerial view.

In a possible implementation, in the second network, an output end of the first decoder is connected to an input end of the second encoder, an output end of the second encoder is connected to an input end of the second decoder, input data of the first decoder includes the first feature, and input data of the second encoder includes an output result of the first decoder and the first aerial view.

In a possible implementation, the first decoder includes a plurality of first convolution layers, the second encoder includes a plurality of second convolution layers, and output results of the first convolution layers are sequentially input into the second convolution layers in a sequence of convolution layers.

In a possible implementation, the navigation unit is configured to determine the first angle information and the first motion information based on the first aerial view, the first surround view, the navigation target, and sensing information, where the sensing information includes information collected by another sensor different from the image sensor, and the another sensor includes one or more of a location sensor, an acceleration sensor, a gyroscope sensor, a geomagnetic sensor, an infrared sensor, an IMU, an odometer, an angular velocity sensor, or a linear velocity sensor.

In a possible implementation, the image processing unit is configured to receive a plurality of second images sent by the motion apparatus, where the plurality of second images are a plurality of images obtained by photographing a second scene by using one or more target capture angles indicated by the first angle information. The image processing unit is further configured to determine a second aerial view and a second surround view of the second scene based on the plurality of second images. The navigation unit is configured to: determine second angle information and second motion information based on the second aerial view, the second surround view, and the navigation target, and send the second angle information and the second motion information to the motion apparatus, where the second angle information indicates the image sensor to adjust the capture angle, and the second motion information indicates the device on which the motion apparatus is located to move toward the navigation target.

In a possible implementation, the motion apparatus and the processing apparatus are deployed on a same computing device, and the computing device includes any one of a self-driving vehicle, an uncrewed aerial vehicle, a mobile robot, or a movable smart home appliance; or the motion apparatus is deployed on a first computing device, and the first computing device includes any one of a self-driving vehicle, an uncrewed aerial vehicle, a mobile robot, or a movable smart home appliance; and the processing apparatus is deployed on a second computing device, and the second computing device includes any one of a virtual machine, a bare metal server, or a container.

According to a fourth aspect, a navigation system is provided. The system includes a motion apparatus and a processing apparatus, the motion apparatus implements functions implemented by the unit module described in the second aspect, and the processing apparatus implements functions implemented by the unit module described in the third aspect.

According to a fifth aspect, a computing device is provided, including a processor and a memory. The memory is configured to store code, and the processor is configured to execute the code to implement the method described in the first aspect.

According to a sixth aspect, a computing device cluster is provided, including at least one first computing device and at least one second computing device. Each first computing device includes a first processor and a first memory, the first memory is configured to store first code, and the first processor is configured to execute the first code to implement the unit module described in the second aspect; and each second computing device includes a second processor and a second memory, the second memory is configured to store second code, and the second processor is configured to execute the second code to implement the unit module described in the third aspect.

According to a seventh aspect, a computer-readable storage medium is provided. The computer-readable storage medium stores instructions, and when the instructions are run by a computing device or a computing device cluster, the method described in the first aspect is implemented.

Based on the implementations provided in the foregoing aspects, this application may further combine technologies in this application to provide more implementations.

### BRIEF DESCRIPTION OF DRAWINGS

FIG. 1 is a diagram of an architecture of a navigation system according to this application;
FIG. 2 shows a deployment manner of a navigation system according to this application;
FIG. 3 shows another deployment manner of a navigation system according to this application;
FIG. 4 is a schematic flowchart of steps of a navigation method according to this application;
FIG. 5 is a diagram of a structure of a navigation model in a navigation method according to this application;
FIG. 6 is a schematic flowchart of steps of adjusting a capture angle of view in a navigation method according to this application;
FIG. 7 is a diagram of a structure of a computing device according to this application;
FIG. 8 is a diagram of a structure of a computing device cluster according to this application; and
FIG. 9 is a diagram of a structure of another computing device cluster according to this application.

### DESCRIPTION OF EMBODIMENTS

The following describes technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

Rapid development and popularization of fields such as self-driving navigation, robot navigation, and uncrewed aerial vehicle navigation promote continuous exploration and innovation of navigation technologies. A conventional navigation technology is usually map-based navigation, and map data needs to be prepared and loaded in advance. When an environment changes, the map data needs to be updated again, causing a limitation on flexibility of a navigation system. A mapless navigation technology is a new environment sensing-based navigation manner, and a navigation function can be implemented without loading map information in advance. The technology uses various sensors (such as a camera, a radar, and a lidar) to obtain environment information and implements precise navigation and obstacle avoidance by using real-time processing and an analysis algorithm, to improve security and efficiency. Compared with a conventional map-based navigation technology, the mapless navigation technology has higher flexibility, adaptability, and personalization, and can better adapt to complex and changing environments.

However, a sensor of the mapless navigation technology is usually a sensor with a fixed angle, and can only sense information about an environment that is within a front field of view. In this case, a robot, a vehicle, or an uncrewed aerial vehicle needs to run for a distance before finding a new navigation path. Consequently, problems of repeated exploration, easy collision, and low efficiency exist. In a complex obstacle environment, the robot, the vehicle, or the uncrewed aerial vehicle may be easily stuck in a dead corner, causing a navigation failure. For example, when the robot enters narrow space under guidance of a fixed angle of view, the robot cannot switch a field of view of a camera due to a limitation of an obstacle. In this case, the robot cannot switch to a new navigation path under a constant angle of view, and the robot is stuck in a dead corner, causing a navigation failure.

In conclusion, it can be learned that, in conventional map-based navigation, offline map construction needs to be implemented for a scene. This has complicated steps and occupies a memory. However, in the mapless navigation technology, there is a large amount of repeated and redundant environment information obtained by using the sensor, and problems such as repeated exploration and getting stuck in a local dead corner easily occur, causing poor precision and low efficiency of navigation.

To resolve the foregoing problems of poor precision and low efficiency of mapless navigation, this application provides a navigation system. A plurality of images at different capture angles are obtained by rotating an image sensor, an aerial view and a surround view are obtained based on the plurality of images, then angle information and motion information are determined based on the aerial view, the surround view, and a navigation target, a subsequent capture angle of the image sensor is adjusted based on the angle information, and a device on which the navigation system is located is indicated, based on the motion information, to move toward the navigation target, so that the image sensor can continue to capture a new image based on an adjusted capture angle, to obtain new capture angle information and new motion information. The rest may be deduced by analogy, until a location indicated by the navigation target is reached. A map does not need to be loaded in advance in an entire navigation process, memory resources are saved, and flexibility is high. In addition, the navigation system can sense all-round environment information from front, rear, left, right, and top view angles and the like, and the device can directly find a navigation path, to avoid problems of repeated exploration, collision, and low efficiency.

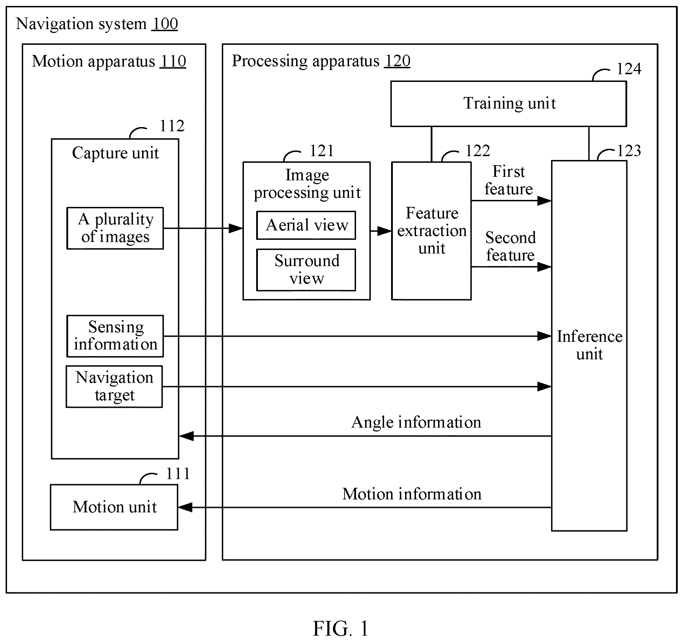

FIG. 1 is a diagram of an architecture of a navigation system according to this application. As shown in FIG. 1, the navigation system 100 may include a motion apparatus 110 and a processing apparatus 120. There is a communication connection between the motion apparatus 110 and the processing apparatus 120, and the communication connection may be specifically a wired connection or a wireless connection. This is not specifically limited in this application. There may be one or more motion apparatuses 110 and processing apparatuses 120. One processing apparatus 120 may establish a communication connection to one or more motion apparatuses 110. This is not specifically limited in this application.

The motion apparatus 110 may be deployed on a device having a mobile function. The device may respond to and execute a navigation instruction delivered by the processing apparatus 120, and is, for example, a mobile robot, a vehicle, an uncrewed aerial vehicle, or a smart home appliance. The mobile robot is a robot that can move in an environment, and may include a tracked/wheeled mobile mechanical apparatus, for example, a logistics robot, an agricultural robot, a patrol robot, or a voice guide robot. The vehicle may include a self-driving vehicle, and the smart home appliance may include a robotic vacuum cleaner. Examples are not described herein one by one.

The processing apparatus 120 may be deployed on a device having a computing capability, for example, a computing device, a terminal device, a computing device cluster, a robot, an uncrewed aerial vehicle, or a self-driving vehicle. The computing device includes a bare metal server (bare metal server, BMS), a virtual machine, a container, or an edge computing device. The BMS refers to a general-purpose physical server, for example, an ARM server or an X86 server. The virtual machine refers to a complete computer system that is implemented by using a network functions virtualization (network functions virtualization, NFV) technology, that is simulated by using software, that has a complete hardware system function, and that is run in a completely isolated environment. The container refers to a group of processes that are isolated from each other due to a resource limitation. The edge computing device refers to a device that is closer to a data source and a terminal user and that has features of a low latency and high bandwidth, for example, an intelligent router or an edge server. The processing apparatus 120 may be further deployed in a computing device cluster, and the computing device cluster may include a plurality of computing devices. The terminal device includes a personal computer, a smartphone, a palmtop processing device, a tablet computer, a mobile notebook computer, an augmented reality (augmented reality, AR) device, a virtual reality (virtual reality, VR) device, an integrated handheld device, a wearable device, a vehicle-mounted device, an intelligent conference device, an intelligent advertisement device, a smart home appliance, and the like. The smart home appliance may be a robotic vacuum cleaner, a floor mopping robot, or the like. This is not specifically limited herein.

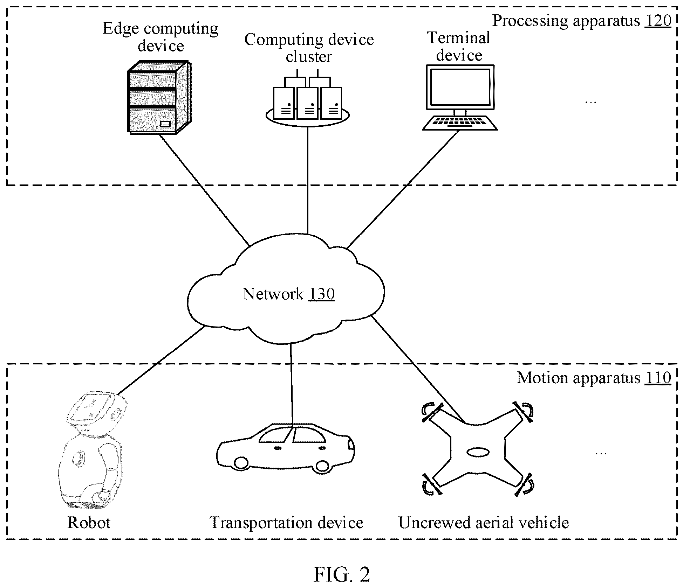

Optionally, the motion apparatus 110 and the processing apparatus 120 may be deployed on different devices, and the motion apparatus 110 and the processing apparatus 120 are connected via a network 130. For example, FIG. 2 shows a deployment manner of the navigation system according to this application. The processing apparatus 120 may be an edge computing device, a computing device cluster, a terminal device, or the like. The motion apparatus 110 may be a robot, a transportation device, an uncrewed aerial vehicle, or the like. This is not specifically limited in this application. For example, the processing apparatus 120 is a computing device cluster, for example, a cloud data center, and the motion apparatus 110 is a transportation device, for example, a self-driving vehicle. For another example, the processing apparatus 120 is a terminal device, for example, a smartphone of a user, the motion apparatus 110 is a robot, and the robot has a mobile apparatus. For another example, the processing apparatus 120 is an edge computing device, the motion apparatus 110 is an uncrewed aerial vehicle, and edge computing devices may be deployed on two sides of a road. It should be understood that the foregoing examples are used for description. This is not specifically limited in this application.

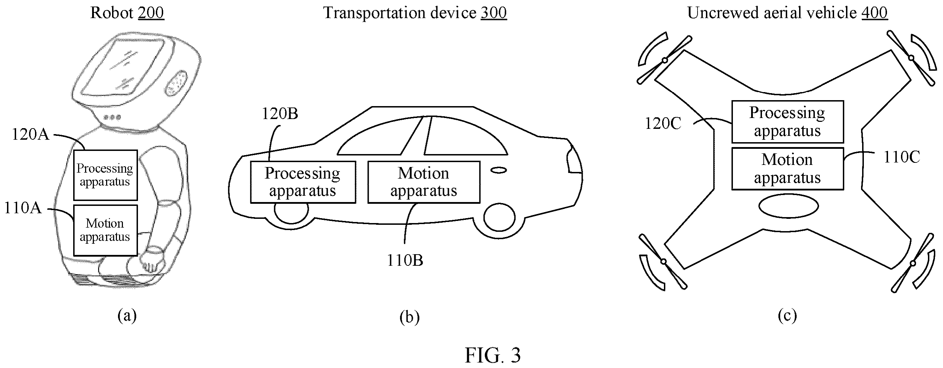

Optionally, the motion apparatus 110 and the processing apparatus 120 may alternatively be deployed on a same device. The motion apparatus 110 and the processing apparatus 120 are connected through a bus, and the bus may be specifically an internal bus or an external bus. This is not specifically limited in this application. For example, FIG. 3 shows another deployment manner of the navigation system according to this application. As shown in FIG. 3, a processing apparatus 120A and a motion apparatus 110A may be deployed on a robot 200, a processing apparatus 120B and a motion apparatus 110B may be deployed on a same transportation device 300, and a processing apparatus 120C and a motion apparatus 110C may be deployed on a same uncrewed aerial vehicle 400.

It should be understood that FIG. 2 and FIG. 3 are used as examples for description. The motion apparatus 110 and the processing apparatus 120 may alternatively be deployed on another type of device. This is not specifically limited in this application.

In a possible implementation, the navigation system may be implemented in a software manner, and may be specifically an independent navigation software tool specially used for navigation. A user may implement a function of the navigation system shown in FIG. 1 by downloading a high navigation software tool. Alternatively, the navigation system may be built in another software tool as a plug-in, for example, used as a secondary open functional module of a robot, a self-driving system, or an uncrewed aerial vehicle, a solution, or a cloud service of a cloud platform. A user may use the navigation system by upgrading the robot, upgrading the self-driving system, upgrading an uncrewed aerial vehicle system, or purchasing the cloud platform service.

In a possible implementation, the navigation system may be deployed in a robot, a self-driving vehicle, or an uncrewed aerial vehicle in a hardware manner. As the navigation system is a part of the robot, the self-driving vehicle, or the uncrewed aerial vehicle, a user may use the navigation system by purchasing the robot, the self-driving vehicle, or the uncrewed aerial vehicle.

Further, the motion apparatus 110 and the processing apparatus 120 may be divided into a plurality of unit modules. For example, as shown in FIG. 1, the motion apparatus 110 may include a motion unit 111 and a capture unit 112, and the processing apparatus 120 may include an image processing unit 121, a feature extraction unit 122, an inference unit 123, and a training unit 124. It should be understood that FIG. 1 shows an example division manner. The motion apparatus 110 and the processing apparatus 120 may further include more or fewer units. For example, the feature extraction unit 122 and the inference unit 123 may be combined into one navigation unit. For example, the image processing unit 121 may be further divided into an aerial view generation unit and a surround view generation unit. This is not limited in this application.

The image processing unit 121, the feature extraction unit 122, the inference unit 123, and the training unit 124 in the processing apparatus 120 may be implemented by using software or hardware. For example, the following uses the image processing unit 121 in the processing apparatus 120 as an example to describe an implementation of the image processing unit 121. Similarly, for implementations of the feature extraction unit 122, the inference unit 123, and the training unit 124, refer to the implementation of the image processing unit 121.

The image processing unit 121 is used as an example of a software functional unit, and the image processing unit 121 may include code running on a computing instance. The computing instance may include at least one of a physical host (computing device), a virtual machine, and a container. Further, there may be one or more computing instances. For example, the image processing unit 121 may include code running on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

The image processing unit 121 is used as an example of a hardware functional unit, and the image processing unit 121 may include at least one computing device, for example, a server. Alternatively, the image processing unit 121 may be a device implemented by using an application-specific integrated circuit (application-specific integrated circuit, ASIC), a device implemented by using a programmable logic device (programmable logic device, PLD), or the like. The PLD may be implemented by using a complex programmable logic device (complex programmable logic device, CPLD), a field programmable gate array (field programmable gate array, FPGA), a generic array logic (generic array logic, GAL), or any combination thereof.

The following describes functions of unit modules in the motion apparatus 110 and the processing apparatus 120.

The capture unit 112 in the motion apparatus 110 is configured to: collect a plurality of pieces of environment information, and send the plurality of pieces of environment information to the processing apparatus 120. The plurality of pieces of environment information are information collected by a same sensor or different sensors for a same scene.

In a specific implementation, the capture unit 112 in the motion apparatus 110 may collect the plurality of pieces of environment information by using a sensor on a device on which the motion apparatus 110 is located, and then send the plurality of pieces of environment information to the information feature extraction unit 122 in the processing apparatus 120. The sensor includes but is not limited to an image sensor, a radar sensor, a voice sensor, a location sensor, an acceleration sensor, a gyroscope sensor, a geomagnetic sensor, an infrared sensor, an inertial measurement unit (inertial measurement unit, IMU), an odometer, an angular velocity sensor, a linear velocity sensor, and the like.

The image sensor is an apparatus configured to capture an image, and includes a camera, a camera, or the like. The voice sensor is a sensor configured to capture a human voice, for example, a microphone or a mike. The location sensor is a sensor for measuring a location or a moving distance of an object, for example, a global positioning system (global positioning system, GPS) or a track sensor. The acceleration sensor is a sensor that can measure an acceleration of an object, and is usually configured to detect a motion status of the object. For example, in a self-driving vehicle, the acceleration sensor may be configured to detect an acceleration of the vehicle and operations such as braking and steering, to help the vehicle implement accurate control and navigation. In a mobile robot, the acceleration sensor may be configured to detect situations such as shaking, vibration, and tilting of the robot, to support stability and safety of the robot. The gyroscope sensor is a sensor that can measure an angular velocity of an object, and may be configured to detect information such as rotation and a direction change of a device. The geomagnetic sensor is a sensor that can measure intensity and a direction of the magnetic field of the earth, and is widely used in fields such as navigation and location identification. The infrared sensor is a sensor that can sense infrared radiation of a surrounding object, and is usually configured to: measure a temperature, detect an obstacle, and the like. The IMU is a device that integrates the acceleration sensor, the gyroscope sensor, and another sensor, and can provide information about the acceleration, the angular velocity, and the direction. The odometer is a sensor that measures a moving distance and a direction of the robot, and usually determines a location and the direction of the robot through rotation of a wheel or a track. The angular velocity sensor is a sensor that can measure a speed of the object rotating around a specific axis. The linear velocity sensor is a sensor that can measure a speed of the object moving in a specific direction.

It should be understood that the foregoing sensor examples are used for description. The device on which the motion apparatus 110 is located may further include a plurality of other information obtaining sensors that can sense a specified measured quantity (a physical quantity, a chemical quantity, a status quantity, and a mechanical quantity) and convert the measured quantity into an available output signal according to a specific rule. Examples are not described herein one by one.

In a possible implementation, the plurality of pieces of environment information may include a plurality of images, the plurality of images include a plurality of images that are collected for a same scene and that are at different angles of view, and the plurality of images may be obtained by continuously changing a capture angle of the image sensor. Optionally, scenario content captured by the plurality of images is adjacent, and scene content captured by the images is adjacent in a horizontal direction or adjacent in a vertical direction in a spatial location. Edges and features of the plurality of images can be spliced to form a complete surround view or panorama, or the complete surround view or panorama can be formed after notches or inconsecutive gaps are filled by using an image processing technology.

The sensor on the device on which the motion apparatus 110 is located includes an image sensor that can change a capture angle. The image sensor may change the capture angle by rotating the device on which the motion apparatus 110 is located, or change the capture angle by rotating a base on which the image sensor is located. For example, assuming that the motion apparatus 110 is deployed on the robot, the image sensor (for example, the camera) may be mounted on a head of the robot, and a plurality of images at different angles of view are obtained by rotating the head of the robot; or the image sensor is mounted on a rotatable base at the bottom of the robot, and when the robot does not rotate, the base may be rotated to enable the image sensor to rotate along the base to photograph an image, to obtain a plurality of images at a plurality of different angles of view. For another example, assuming that the motion apparatus 110 is deployed on the self-driving vehicle, the image sensor (for example, the camera) may be mounted on a rotatable bracket in the self-driving vehicle, so that the image sensor can photograph an image with rotation of the bracket, to obtain a plurality of images at a plurality of different angles of view. For another example, a robotic vacuum cleaner may also have a rotatable base and a built-in camera, and photograph an image with rotation of the base, to obtain a plurality of images at different angles of view. It should be understood that the foregoing examples are used for description. This is not specifically limited in this application.

Optionally, a width of the rotatable base on which the image sensor is located may be less than a maximum width of the robot. In this case, when the robot enters narrow space or a dead end environment, the robot cannot rotate due to a limitation of an obstacle. The base on which the image sensor is located is rotated to obtain a rear field of view of the robot, to avoid a problem of a navigation failure caused by the robot being stuck in a dead corner.

For example, when the device is a vehicle, the vehicle may capture a plurality of first images at a plurality of angles by rotating a base of a vehicle-mounted camera, to generate a first aerial view and a first surround view, determine first angle information and first motion information based on the first aerial view, the first surround view, and a navigation target, then adjust a movement direction and a movement speed based on the first motion information, and move toward the navigation target. In addition, the vehicle adjusts the capture angle of the image sensor based on the first angle information, captures a second image to generate a second aerial view and a second surround view, determines second angle information and second motion information based on the second aerial view, the second surround view, and the navigation target, and then continues to move toward the navigation target based on the second motion information. The rest may be deduced by analogy, until the vehicle reaches a destination indicated by the navigation target.

For another example, when the device is a robot, the robot may capture a plurality of first images by rotating the robot or rotating the base of the image sensor, to generate a first aerial view and a first surround view, determine first angle information and first motion information based on the first aerial view, the first surround view, and a navigation target, then adjust a movement direction and a movement speed based on the first motion information, and move toward the navigation target. In addition, the robot adjusts the capture angle of the image sensor based on the first angle information, captures a second image to generate a second aerial view and a second surround view, determines second angle information and second motion information based on the second aerial view, the second surround view, and the navigation target, and then continues to move toward the navigation target based on the second motion information. The rest may be deduced by analogy, until the robot reaches a destination indicated by the navigation target.

It should be understood that other types of devices such as the uncrewed aerial vehicle and the robotic vacuum cleaner may also implement the solutions described in this application based on the foregoing examples. Examples are not described herein one by one.

It should be noted that the plurality of images may alternatively be obtained by collecting a same scene by using image sensors with different capture angles of view. In other words, a plurality of image sensors with different capture angles of view are deployed on the device on which the motion apparatus 110 is located. However, this increases hardware costs. Therefore, selection may be performed based on an actual application scenario. This is not specifically limited in this application.

In a possible implementation, the plurality of pieces of environment information may further include a plurality of pieces of sensing information, and the plurality of pieces of sensing information include information collected by another sensor different from the image sensor, for example, information collected by a sensor such as the voice sensor, the location sensor, the acceleration sensor, the gyroscope sensor, the geomagnetic sensor, the infrared sensor, the IMU, the odometer, the angular velocity sensor, or the linear velocity sensor. This is not specifically limited in this application.

Further, the plurality of pieces of sensing information include information obtained from a third-party platform. The third-party platform may include a government public data platform and a third-party network service platform. The government public data platform may provide various types of public data. For example, a weather information service platform may provide data related to weather forecast; a time information service platform may provide current time, date, and holiday information of each country; and a medical institution service platform may provide notification information (for example, a hospital leave notification and information about a newly hired expert) released by each medical institution. The third-party platform may further include another public data platform that can provide information such as traffic planning data, road construction information, traffic flow data, parking lot locations, charging locations, and population census data. Examples are not described herein one by one. The third-party network service platform may be a service platform that provides network data, for example, an instant communication service platform, an online audio and video service platform, an online shopping platform, a logistics tracking platform, a search engine, a map service platform, or a take-out service platform. It should be understood that the foregoing mentioned government public data platform and third-party network service platform are merely used as examples for description, and may be specifically determined based on an actual application scenario. This is not specifically limited in this application.

In a possible implementation, the plurality of pieces of environment information may further include a navigation target. The navigation target may include a destination. The destination may be a specific address, for example, an address, a store, a restaurant, my home, a living room, or a kitchen; may be a specific coordinate, for example, a global positioning system (global positioning system, GPS) coordinate; or may be an orientational feature of the destination, for example, 100 meters eastward or 100 meters leftward. The navigation target may further include a navigation condition, for example, a shortest path, shortest time, congestion avoidance, and obstacle avoidance. The navigation target may further include more abundant content. Examples are not described herein one by one.

The image processing unit 121 of the processing apparatus 120 is configured to: receive the plurality of pieces of environment information sent by the capture unit 112, and generate a surround view and an aerial view based on the plurality of images in the plurality of pieces of environment information.

Optionally, the surround view may be obtained by aligning and splicing the plurality of images in the horizontal or vertical direction. The surround view is usually an image of a wide-angle field of view. The wide-angle field of view herein may be a field of view beyond a range that can be captured by a camera or human eyes, for example, a field of view that exceeds the horizontal direction by 160 degrees or a field of view that exceeds the vertical direction by 175 degrees. It should be understood that a wider field of view of the surround view provides more abundant and comprehensive visual information. In some embodiments, the surround view can show a scene at a 360-degree angle of view.

It should be understood that, if there are notches or inconsecutive gaps between two images, the notches or the inconsecutive gaps may be filled by using the image processing technology. The image processing technology herein may include but is not limited to methods such as pixel interpolation, Poisson reconstruction, texture synthesis, image repair, and deep learning. For example, a value of a missing pixel may be calculated based on a pixel around the missing pixel by using a linear interpolation method or a quadratic interpolation method, and then the value of the missing pixel is filled into a missing area, or an AI model is trained according to the deep learning method, so that the AI model has a capability of predicting the missing area. The foregoing example is used for description. This is not specifically limited in this application.

Optionally, the aerial view is an image showing a full view of a scene or a region from a top view angle, and is similar to observing the ground from a bird's angle of view. The angle of view may provide a wider and more comprehensive field of view. In a specific implementation, the aerial view may be an image obtained by projecting pictures at a plurality of angles of view on a plane by using a perspective transformation mapping (inverse perspective mapping, IPM) technology, or may be obtained by using another technical means. For example, after a three-dimensional model is constructed by using a three-dimensional reconstruction technology, the aerial view is obtained through rendering from the top view angle. It should be understood that the foregoing example is used for description. This is not specifically limited in this application. The aerial view may be generated based on a plurality of images, or may be generated based on the surround view. In other words, the aerial view and the surround view may be processed and generated in parallel based on the plurality of images; or the surround view may be generated first, and then the aerial view may be generated. This is not specifically limited in this application.

It may be understood that, based on the aerial view and the surround view, a visual feature that is of the device on which the motion apparatus 110 is located and that is at an all-round angle of view may be obtained, so that the visual feature obtained by the motion apparatus 110 is more comprehensive, and navigation information generated based on the visual feature is more accurate.

The feature extraction unit 122 of the processing apparatus 120 is configured to: perform feature extraction on the surround view and the aerial view to obtain a first feature and a second feature, and then send the first feature and the second feature to the inference unit 123.

In a possible implementation, the surround view and the aerial view may be input into a feature extraction network, to obtain the first feature and the second feature. The feature extraction network includes a first network and a second network. Input data of the first network includes the surround view, and output data includes the first feature. Input data of the second network includes the aerial view, and output data includes the second feature.

Optionally, the input data of the second network may further include the surround view, in other words, the input data of the second network includes the aerial view and the surround view, and the output data includes the second feature. It should be understood that a visual feature of the aerial view is extracted based on the surround view, so that information included in the second feature is more comprehensive, and navigation information generated based on the information is more accurate.

In a possible implementation, the input data of the second network may include the first feature and the aerial view, and the output data includes the second feature. It should be understood that the first feature is a feature extracted by the first network from the surround view. In comparison with an original surround view, the first feature may exclude noise or other redundant information. Extracting the visual feature of the aerial view based on the first feature can not only make the information included in the second feature more comprehensive, but also improve efficiency and accuracy of extracting the second feature.

Optionally, the first network and the second network may be determined based on an autoencoder (autoencoder, AE) network. The autoencoder network may extract features from input data, and these features may be used for subsequent tasks such as classification and clustering, or high-dimensional input data may be represented as low-dimensional encoding, to implement data compression and dimension reduction. The autoencoder network may further have other functions. For example, an autoencoder network for data reconstruction may implement data reconstruction and denoising, and an autoencoder network for data generation may implement image style conversion. This is not specifically limited in this application.

In a specific implementation, the autoencoder network may include an encoder (encoder) and a decoder (decoder). The encoder is configured to convert the input data into a low-dimensional vector representation. An output result of the encoder has a function set by the autoencoder network, for example, dimension reduction, feature extraction, denoising, and style conversion in the foregoing content. The decoder is configured to: receive a low-dimensional vector output by the encoder, and map the low-dimensional vector back to space of the input data to obtain an output result. If the output result of the decoder differs greatly from the input data, it means that the output result of the encoder is incorrect and needs to be further optimized. In some cases, some information of the input data may be lost due to problems such as noise and distortion in a transmission or storage process. In this case, the decoder may attempt to reconstruct original data from an encoding result of the input data with information loss. In addition, in some application scenarios, the output result of the decoder is a result obtained through noise reduction or data compression, and may be understood as higher-quality input data, and data in a corresponding format may be generated based on a subsequent processing requirement. Therefore, the output of the decoder and the output of the encoder have respective applications. When the input data needs to be encoded and a vector representation of the input data needs to be obtained, the output of the encoder should be used. When input data in a specific format or higher-quality input data is needed, the output of the decoder should be used. The foregoing example is used for description. This is not specifically limited in this application.

Optionally, the first network may include a first encoder of a first autoencoder network, and the second network may include a first decoder of the first autoencoder network, a second encoder of a second autoencoder network, and a decoder of the second autoencoder network. The input data of the first network includes the surround view, the output data includes the first feature, and the first feature is an output result of the first encoder.

In a specific implementation, an output end of the first decoder in the second network is connected to an input end of the second encoder, and an output end of the second encoder is connected to an input end of the second decoder. Input data of the first decoder includes the first feature, input data of the second encoder includes an output result of the first decoder and the aerial view, input data of the second decoder includes an output result of the second encoder, and output of the second decoder is the second feature.

Simply speaking, the surround view is input into the first encoder of the first network, the first encoder outputs an obtained first feature, and the first feature is input into the first decoder of the second network to obtain the output result of the first decoder. Then, the output result of the first decoder and the aerial view are input into the second encoder of the second network to obtain the output result of the second encoder, then the output result of the second encoder is input into the second decoder, and the second decoder outputs an obtained second feature. It should be understood that, the first feature and the aerial view are used as the input data of the second network, so that a finally extracted second feature can have more abundant surround-view information and aerial information, and a decision obtained through inference based on the feature is more accurate.

Optionally, the autoencoder network may be a plurality of convolution layers, the first decoder may include a plurality of first convolution layers, and the second encoder may include a plurality of second convolution layers. In a possible implementation, output results of the first convolution layers are sequentially input into the plurality of second convolution layers, and there is a correspondence between each first convolution layer and each second convolution layer. For example, the first decoder includes three convolution layers that are sequentially L11, L12, and L13, and the second encoder includes three convolution layers that are sequentially L21, L22, and L23. In this case, an output result of L11 is input into L21, an output result of L12 is input into L22, and an output result of L13 is input into L23. It should be understood that the foregoing example is used for description. This is not specifically limited in this application.

It should be noted that in the foregoing implementation, a first quantity of first convolution layers of the first decoder is the same as a second quantity of second convolution layers of the second encoder. When the first quantity is greater than the second quantity, input data of each second convolution layer may be an output result of one or more first convolution layers. When the first quantity is less than the second quantity, input data of a part of the second convolution layers is output data of the first convolution layers, and input data of the other part of the second convolution layers may be output data of a previous second convolution layer.

It should be understood that, the first feature is the output result of the first encoder, the first feature may be a feature vector, and the second feature is an output result of the second decoder. A function of the decoder is to map a vector output by the encoder back to the space of the input data. Therefore, the second feature may be a two-dimensional depth top view. The input data of the second encoder not only includes the aerial view, but also includes the output result of the first decoder. Therefore, in comparison with the aerial view, the two-dimensional depth top view additionally includes an image feature of the surround view, and a decision obtained through inference based on the feature is more accurate.

The inference unit 123 may obtain an inference result based on the first feature, the second feature, and the navigation target, where the inference result includes angle information and motion information, the capture angle is used by the capture unit 112 of the motion apparatus 110 to adjust the capture angle of the image sensor, and obtain a plurality of new images, and the motion information is used by the motion unit 111 of the motion apparatus 110 for navigation, to move toward a target location.

It may be understood that, the inference unit 123 performs inference based on the first feature and the second feature, where the first feature and the second feature are obtained from the aerial view and the surround view, so that the navigation system can not only sense information about an environment that is within a front field of view, but also sense information about an environment at rear, left, right, and top view angles, and comprehensively sense information about an environment around the device (for example, a robot) on which the motion apparatus is located, so that the device on which the motion apparatus is located can directly find a navigation path, to avoid problems of repeated exploration, collision, and low efficiency.

In a possible implementation, the inference unit 123 may obtain the inference result based on the first feature, the second feature, the sensing information, and the navigation target. It should be understood that the aerial view and the surround view can provide multi-orientational environment information, and the sensing information can provide kinematics information and other auxiliary reference information of the device, so that the navigation system can obtain a more accurate inference result, to improve navigation precision and efficiency.

In a specific implementation, the inference unit 123 may input the first feature, the second feature, the sensing information, and the navigation target into an inference network, to obtain the inference result. The inference network may include a convolutional neural network (convolutional neural network, CNN), a recurrent neural network (recurrent neural network, RNN), a support vector machine (support vector machine, SVM), a decision tree (decision tree), a deep learning network (deep learning neural network, DNN), a long short-term memory (long short-term memory, LSTM) network, and the like. This is not specifically limited in this application.

Optionally, when the inference network is the LSTM network, input data of the inference network further includes historical sensing information. To be specific, the inference unit 123 may input the first feature, the second feature, the sensing information, the navigation target, and the historical sensing information into the inference network, to obtain the inference result. Collection time of the historical sensing information is earlier than collection time of the sensing information. It should be understood that the LSTM network is a network that captures a long-term dependency relationship in a time sequence based on historical data. The LSTM network is used as the inference network, so that historical sensing information of the past can be considered to obtain a more accurate inference result, and a gradient disappearance problem can also be resolved, to improve model precision.

Optionally, the inference unit 123 may fuse the first feature, the second feature, the sensing information, the navigation target, and the historical sensing information in the input data to obtain a fusion result, and then input the fusion result into the inference network. In a specific implementation, feature dimensions of the first feature, the second feature, the sensing information, the navigation target, and the historical sensing information may be different. Therefore, the feature dimensions of the first feature, the second feature, the sensing information, the navigation target, and the historical sensing information may be first unified, and dimension reduction processing may be performed on a high-dimensional feature. For example, the second feature is a feature extracted based on the aerial view, and the aerial view is a top view of a two-dimensional plane angle of view. Therefore, the second feature may be a two-dimensional feature. The sensing information is usually a one-dimensional feature. Therefore, compression and dimension reduction need to be performed on the second feature, and then the second feature is spliced and fused with the first feature. In a specific implementation, the second feature may be input into a third autoencoder network, and a second feature obtained through compression and dimension reduction is obtained based on an output result of a third encoder of the third autoencoder network. Certainly, compression and dimension reduction may be performed on the second feature in another manner, so that a data dimension of the second feature is consistent with that of other input data, and feature fusion can be performed. This is not specifically limited in this application.

It should be understood that feature extraction and encoding are performed on the aerial view and the surround view, so that images, features, and sensing information in different formats can be fused and inferred, to avoid problems, such as poor model calculation efficiency and poor precision, caused by data from a plurality of different sources.

In an embodiment, the angle information includes one or more target capture angles, and the target capture angle is used by the capture unit 112 to adjust the capture angle of the image sensor. In a specific implementation, the target capture angle in the angle information may be a specific value. For example, a capture angle at a front angle of view is 0°, a capture angle is +120° when the front angle of view is used as a reference and rotates by 120 degrees to the left, and a capture angle is -120° when the front angle of view is used as the reference and rotates by 120 degrees to the right. The capture angle may also be replaced with a noun. For example, that the capture angle may be a left angle of view means that the front angle of view is used as the reference and rotates by 120 degrees to the left, and when the capture angle is a right angle of view, it means that the front angle of view is used as the reference and rotates by 120 degrees to the right. It should be understood that the foregoing example is used for description, and a specific representation form of the capture angle is not limited in this application.

Optionally, the angle information further includes a correspondence between a capture order and a target capture angle. Refer to the foregoing content. It can be learned that the image sensor may continuously change the capture angle to obtain the plurality of images. Therefore, the one or more target capture angles output herein may be a plurality of capture angles that are continuously changed by the image sensor, or one or more of the plurality of capture angles that are continuously changed. Therefore, the angle information may further include the correspondence between the capture order and the target capture angle. For example, the angle information may include a 1^{st} capture angle of 0°, a 2^{nd} capture angle of +120°, and a 3^{rd} capture angle of -120°.

It should be noted that the target capture angle in the angle information may be an adjusted capture angle of the image sensor, or may be an angle that needs to be adjusted based on a current capture angle. For example, if the current capture angle is -120°, and the capture angle needs to be adjusted to -180°, the target capture angle may be -180°, or the target capture angle is -60°. It should be understood that the foregoing examples are used for description. This is not specifically limited in this application.

In an embodiment, the motion information may include a driving route, a movement direction, a movement speed, a movement acceleration, a movement angular velocity, and the like, and may further include other information needed to indicate device movement. Motion information needed by different devices may be different. This is not specifically limited in this application. For example, when the device is a vehicle, the vehicle may adjust information such as a movement direction, a movement speed, and a movement acceleration based on the motion information, and move toward the navigation target. When the device is a robot, the robot may adjust information such as a movement direction, a movement manner, and a movement speed based on the motion information, and move toward the navigation target. When the device is an uncrewed aerial vehicle, the uncrewed aerial vehicle may adjust a movement direction, a movement speed, a movement height, a movement posture, and the like based on the motion information. This is not specifically limited in this application.

The training unit 124 of the processing apparatus 120 is configured to train an AI network by using a sample set, to obtain a trained feature extraction network and a trained inference network.

In an embodiment, the feature extraction network and the inference network may be different network layers in a same navigation model, the feature extraction network is a feature extraction layer of the navigation model, and the inference network is a fully-connected layer of the navigation model. The navigation model is obtained through training by using the sample set.

Optionally, the sample set may be a labeled sample set. The sample set includes input data and a label. The input data includes a known aerial view, a known surround view, known sensing information, and a known navigation target. The label of the input data includes known angle information and known motion information. After the input data is input into the navigation model, an output result is obtained, and a network parameter is adjusted based on a loss (loss) value between the output result and the label, until the model converges and a trained navigation model is obtained.

Optionally, the sample set may be an unlabeled sample set. The sample set includes a known aerial view, a known surround view, known sensing information, and a known navigation target. The navigation model may be implemented by using a reinforcement learning algorithm. An output result of the navigation model includes angle information, motion information, and a decision value. The decision value is used to evaluate quality of the output result, and a model parameter is adjusted based on the decision value and a loss, until the model converges and a trained navigation model is obtained.

It should be noted that, if the inference network in the navigation model is the LSTM network, the input data of the sample set may further include known historical sensing information.

It should be understood that the feature extraction network and the inference network may alternatively be obtained through training by using another machine learning method. Examples are not described herein one by one. Training methods of the feature extraction network and the inference network are not limited in this application.

The motion unit 111 of the motion apparatus 110 is configured to receive the motion information of the inference unit 123, and the capture unit 112 is configured to receive the angle information of the inference unit. The motion unit 111 may indicate, based on the motion information, the device on which the motion apparatus 110 is located to move, and the capture unit 112 may adjust the capture angle of the image sensor based on the angle information.

It should be noted that, when capturing a plurality of images for the first time, the capture unit 112 may capture the images at a preset capture angle, and then may capture the images at a capture angle adjusted based on the angle information sent by the inference unit 123.

Optionally, when the angle information displays a case in which the capture angle of the image sensor needs to be adjusted, the motion unit 111 may move toward the navigation target at a preset speed, and after adjustment of capture scheduling is completed, move at a movement speed in the motion information. The preset speed may be a low speed that can ensure image capturing quality, to improve capture quality of the plurality of images.

Optionally, when the angle information displays a case in which the capture angle of the image sensor does not need to be adjusted, the motion unit 111 may indicate, based on the motion information, the device on which the motion apparatus 110 is located to move toward the navigation target.

Optionally, the capture unit 112 may periodically collect environment information. The processing apparatus 120 may periodically receive the environment information and perform inference on the environment information to obtain the angle information and the motion information. The capture unit and the motion unit 111 periodically receive the angle information and the motion information, and process the angle information and the motion information. Therefore, the motion information generated by the inference unit may be angle information and motion information in a periodicity. As the environment information is periodically collected, the generated motion information may be continuously changed. For example, a navigation route may be continuously adjusted to achieve a purpose of real-time navigation, thereby improving stability of the solution.

For example, if an image captured in a first periodicity is a first image, and an image captured in a second periodicity is a second image, the capture unit 112 may first capture a plurality of first images in the first periodicity, where the plurality of first images are a plurality of images obtained by photographing a first scene by the image sensor from different capture angles. Then, the image processing unit 121 determines a first aerial view and a first surround view of the first scene based on the plurality of first images, and the feature extraction unit 122 and the inference unit 123 then determine first angle information and first motion information based on the first aerial view, the first surround view, and a navigation target.

Then, the capture unit 112 may capture a plurality of second images in the second periodicity, where the plurality of second images are a plurality of images obtained by photographing a second scene by using a capture angle indicated by the first angle information. Then, the image processing unit 121 determines a second aerial view and a second surround view of the second scene based on the plurality of second images, and the feature extraction unit 122 and the inference unit 123 determine second angle information and second motion information based on the second aerial view, the second surround view, and the navigation target. The rest may be deduced by analogy, until the device on which the motion apparatus 110 is located reaches a location indicated by the navigation target.

In conclusion, in the navigation system provided in this application, a plurality of images at different capture angles are obtained by rotating the image sensor, an aerial view and a surround view are obtained based on the plurality of images, then angle information and motion information are determined based on the aerial view, the surround view, and the navigation target, a subsequent capture angle of the image sensor is adjusted based on the angle information, and a device on which the navigation system is located is indicated, based on the motion information, to move toward the navigation target, so that the image sensor can continue to capture a new image based on an adjusted capture angle, to obtain new capture angle information and new motion information. The rest may be deduced by analogy, until the location indicated by the navigation target is reached. A map does not need to be loaded in advance in an entire navigation process, memory resources are saved, and flexibility is high. In addition, the navigation system can sense all-round environment information from front, rear, left, right, and top view angles and the like, and the device can directly find the navigation path, to avoid the problems of repeated exploration, collision, and low efficiency.

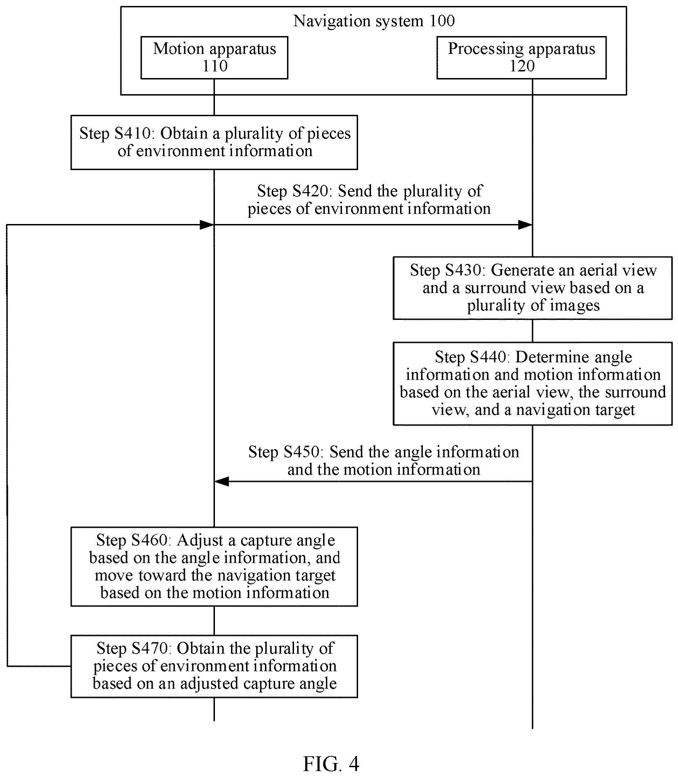

FIG. 4 is a schematic flowchart of steps of a navigation method according to this application. The method may be applied to the navigation system shown in FIG. 1 to FIG. 3. As shown in FIG. 4, the method may include the following steps.

Step S410: A motion apparatus 110 obtains a plurality of pieces of environment information. This step may be implemented by the capture unit 112 in the embodiment in FIG. 1.

Optionally, the environment information may include a plurality of images. The plurality of images may be obtained by changing a capture angle by an image sensor (for example, a camera) on the motion apparatus 110. The image sensor may change the capture angle by rotating a device on which the motion apparatus 110 is located, or change the capture angle by rotating a base on which the image sensor is located.

Further, a width of a rotatable base on which the image sensor is located may be less than a maximum width of a robot. In this case, when the robot enters narrow space or a dead end environment, the robot cannot rotate due to a limitation of an obstacle. The base on which the image sensor is located rotates to obtain a rear field of view of the robot, to avoid a problem of a navigation failure caused by the robot being stuck in a dead corner.

Optionally, the environment information may further include a navigation target and sensing information. The navigation target may include a destination and a navigation condition. The destination may be a specific address, may be a specific coordinate, or may be an orientational feature of the destination. The navigation condition may be a shortest path, shortest time, congestion avoidance, obstacle avoidance, or the like. The sensing information may include information collected by another sensor different from the image sensor, and may further include information obtained from a third-party platform, for example, a government public data platform and a third-party network service platform.

It should be noted that for a specific implementation of the motion apparatus 110 and detailed descriptions of the environment information, refer to related descriptions in the embodiment in FIG. 1. Details are not described herein again.

Step S420: The motion apparatus 110 sends the plurality of pieces of environment information to a processing apparatus 120. This step may be implemented by the capture unit 112 in the embodiment in FIG. 1.

Step S430: The processing apparatus 120 generates an aerial view and a surround view based on the plurality of images. This step may be implemented by the image processing unit 121 in the embodiment in FIG. 1.

Optionally, the surround view may be obtained by aligning and splicing the plurality of images in a horizontal or vertical direction. The surround view is usually an image of a wide-angle field of view. The wide-angle field of view herein may be a field of view beyond a range that can be captured by a camera or human eyes. In some embodiments, the surround view can show a scene at a 360-degree angle of view. In a specific implementation, if there are notches or inconsecutive gaps between two images, the notches or the inconsecutive gaps may be filled by using an image processing technology. The image processing technology herein may include but is not limited to methods such as pixel interpolation, Poisson reconstruction, texture synthesis, image repair, and deep learning. This is not specifically limited in this application.

Optionally, the aerial view is an image showing a full view of a scene or a region from a top view angle, and is similar to observing the ground from a bird's angle of view. The angle of view may provide a wider and more comprehensive field of view. In a specific implementation, the aerial view may be an image obtained by projecting pictures at a plurality of angles of view on a plane by using an IPM technology, or may be obtained by using another technical means. The aerial view may be generated based on the plurality of images, or may be generated based on the surround view. This is not specifically limited in this application.

It may be understood that, based on the aerial view and the surround view, a visual feature that is of the device on which the motion apparatus 110 is located and that is at an all-round angle of view may be obtained, so that the visual feature obtained by the motion apparatus 110 is more comprehensive, and navigation information generated based on the visual feature is more accurate.

It should be noted that, for a specific implementation of the processing apparatus 120 and specific descriptions of the aerial view and the surround view, refer to related descriptions in the embodiment in FIG. 1. Details are not described herein again.

Step S440: The processing apparatus 120 determines angle information and motion information based on the aerial view, the surround view, and the navigation target. This step may be implemented by the feature extraction unit 122 and the inference unit 123 in the embodiment in FIG. 1.

Optionally, the processing apparatus 120 may input a first surround view and a first aerial view into a navigation model, to obtain first angle information and first motion information, where the navigation model includes a feature extraction network and an inference network, the feature extraction network includes a first network and a second network, the first network is configured to generate a first feature based on the first surround view, the second network is configured to generate a second feature based on the first surround view and the first aerial view, and the inference network is configured to obtain the first angle information and the first motion information based on the first feature, the second feature, and the navigation target.

It may be understood that, inference is performed based on the first surround view and the first aerial view, so that the navigation system can not only sense information about an environment that is within a front field of view, but also sense information about environment at rear, left, right, and top view angles, and comprehensively sense information about an environment around the device (for example, a robot) on which the motion apparatus is located, so that the device on which the motion apparatus is located can directly find a navigation path, to avoid problems of repeated exploration, collision, and low efficiency.

Optionally, input data of the second network may further include the surround view, in other words, the input data of the second network includes the aerial view and the surround view, and output data includes the second feature. It should be understood that a visual feature of the aerial view is extracted based on the surround view, so that information included in the second feature is more comprehensive, and navigation information generated based on the information is more accurate.

Optionally, the input data of the second network may include the first feature and the aerial view, and the output data includes the second feature. It should be understood that the first feature is a feature extracted by the first network from the surround view. In comparison with an original surround view, the first feature may exclude noise or other redundant information. Extracting the visual feature of the aerial view based on the first feature can not only make the information included in the second feature more comprehensive, but also improve efficiency and accuracy of extracting the second feature.

In a specific implementation, the first network and the second network may be determined based on an autoencoder network, and the autoencoder network may include an encoder and a decoder. For descriptions of the autoencoder network, refer to related descriptions in the embodiment in FIG. 1. Details are not described herein again. Optionally, the first network may include a first encoder of a first autoencoder network, and the second network may include a first decoder of the first autoencoder network, a second encoder of a second autoencoder network, and a decoder of the second autoencoder network. Input data of the first network includes the surround view, output data includes the first feature, and the first feature is an output result of the first encoder.

Optionally, an output end of the first decoder in the second network is connected to an input end of the second encoder, and an output end of the second encoder is connected to an input end of the second decoder. Input data of the first decoder includes the first feature, input data of the second encoder includes an output result of the first decoder and the aerial view, input data of the second decoder includes an output result of the second encoder, and output of the second decoder is the second feature. It should be understood that, the first feature and the aerial view are used as the input data of the second network, so that a finally extracted second feature can have more abundant surround-view information and aerial information, and a decision obtained through inference based on the feature is more accurate.

Optionally, the autoencoder network may be a plurality of convolution layers, the first decoder may include a plurality of first convolution layers, and the second encoder may include a plurality of second convolution layers. In a possible implementation, output results of the first convolution layers are sequentially input into the plurality of second convolution layers, and there is a correspondence between each first convolution layer and each second convolution layer.

It should be noted that in the foregoing implementation, a first quantity of first convolution layers of the first decoder is the same as a second quantity of second convolution layers of the second encoder. When the first quantity is greater than the second quantity, input data of each second convolution layer may be an output result of one or more first convolution layers. When the first quantity is less than the second quantity, input data of a part of the second convolution layers is output data of the first convolution layers, and input data of the other part of the second convolution layers may be output data of a previous second convolution layer.

It should be understood that, the first feature is the output result of the first encoder, the first feature may be a feature vector, and the second feature is an output result of the second decoder. A function of the decoder is to map a vector output by the encoder back to space of the input data. Therefore, the second feature may be a two-dimensional depth top view. The input data of the second encoder not only includes the aerial view, but also includes the output result of the first decoder. Therefore, in comparison with the aerial view, the two-dimensional depth top view additionally includes an image feature of the surround view, and a decision obtained through inference based on the feature is more accurate.

In a possible implementation, an inference result may be obtained based on the first feature, the second feature, the sensing information, and the navigation target. It should be understood that the aerial view and the surround view can provide multi-orientational environment information, and the sensing information can provide kinematics information and other auxiliary reference information of the device, so that the navigation system can obtain a more accurate inference result, to improve navigation precision and efficiency.

In a specific implementation, the first feature, the second feature, the sensing information, and the navigation target may be input into the inference network, to obtain the inference result. Optionally, when the inference network is an LSTM network, input data of the inference network further includes historical sensing information, where collection time of the historical sensing information is earlier than collection time of the sensing information.

Optionally, the first feature, the second feature, the sensing information, the navigation target, and the historical sensing information in the input data may be fused to obtain a fusion result, and then the fusion result is input into the inference network. In a specific implementation, feature dimensions of the first feature, the second feature, the sensing information, the navigation target, and the historical sensing information may be different. Therefore, the feature dimensions of the first feature, the second feature, the sensing information, the navigation target, and the historical sensing information may be first unified, and dimension reduction processing may be performed on a high-dimensional feature. For example, the second feature is a feature extracted based on the aerial view, and the aerial view is a top view of a two-dimensional plane angle of view. Therefore, the second feature may be a two-dimensional feature. The sensing information is usually a one-dimensional feature. Therefore, compression and dimension reduction need to be performed on the second feature, and then the second feature is spliced and fused with the first feature. In a specific implementation, the second feature may be input into a third autoencoder network, and a second feature obtained through compression and dimension reduction is obtained based on an output result of a third encoder of the third autoencoder network. Certainly, compression and dimension reduction may be performed on the second feature in another manner, so that a data dimension of the second feature is consistent with that of other input data, and feature fusion can be performed. This is not specifically limited in this application.

It should be understood that feature extraction and encoding are performed on the aerial view and the surround view, so that images, features, and sensing information in different formats can be fused and inferred, to avoid problems, such as poor model calculation efficiency and poor precision, caused by data from a plurality of different sources.

In this embodiment of this application, the navigation model may be obtained through training by using a sample set. Specifically, before step S430, an AI network may be trained by using the sample set, to obtain a trained navigation model.

Optionally, the feature extraction network and the inference network may be different network layers in a same navigation model, the feature extraction network is a feature extraction layer of the navigation model, and the inference network is a fully-connected layer of the navigation model. The navigation model is obtained through training by using the sample set.

Optionally, the sample set may be a labeled sample set. The sample set includes input data and a label. The input data includes a known aerial view, a known surround view, known sensing information, and a known navigation target. The label of the input data includes known angle information and known motion information. After the input data is input into the navigation model, an output result is obtained, and a network parameter is adjusted based on a loss (loss) value between the output result and the label, until the model converges and a trained navigation model is obtained.

Optionally, the sample set may be an unlabeled sample set. The sample set includes the known aerial view, the known surround view, the known sensing information, and the known navigation target. The navigation model may be implemented by using a reinforcement learning algorithm. The output result of the navigation model includes the angle information, the motion information, and a decision value. The decision value is used to evaluate quality of the output result, and the model parameter is adjusted based on the decision value and a loss, until the model converges and the trained navigation model is obtained.

It should be noted that, if the inference network in the navigation model is the LSTM network, the input data of the sample set may further include known historical sensing information.

It should be understood that the feature extraction network and the inference network may alternatively be obtained through training by using another machine learning method. Examples are not described herein one by one. Training methods of the feature extraction network and the inference network are not limited in this application.

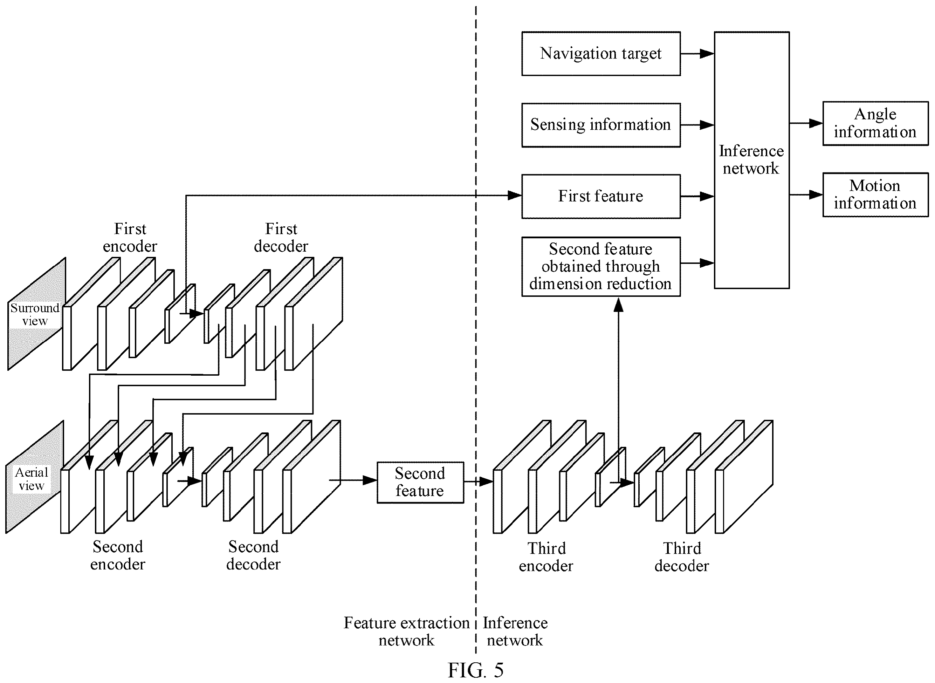

For example, FIG. 5 is a diagram of a structure of a navigation model in a navigation method according to this application. As shown in FIG. 5, the navigation model may include a feature extraction network and an inference network.

In the example shown in FIG. 5, a surround view is input into a first encoder, the first encoder outputs a first feature, an output result of a first decoder and an aerial view are input into a second encoder, a second decoder outputs a second feature, and then the second feature is input into a third encoder. The third encoder outputs a dimension-reduced second feature, and then inputs the first feature, the dimension-reduced second feature, sensing information, and a navigation target to the inference network, to obtain angle information and motion information.

It should be noted that, if the inference network is an LSTM, input data input into the inference network further includes historical sensing information. In a training process, if the inference network is implemented by using a reinforcement learning algorithm, an output result of the inference network further includes a reward value, and a model parameter is adjusted based on the reward value. However, in an inference phase, the output result of the inference network does not include the reward value. For details, refer to the description in the foregoing embodiment. Details are not described herein again.

An output result of each convolution layer in the first decoder may be used as input data and input into each convolution layer in the second encoder. For example, in the example shown in FIG. 5, an output result of a 1^{st} convolution layer of the first decoder may be used as input data of a 2^{nd} convolution layer of the second encoder, and an output result of a 2^{nd} convolution layer of the first decoder may be used as input data of a 3^{rd} convolution layer of the second encoder. The rest may be deduced by analogy. It should be understood that FIG. 5 is used as an example for description, in this application, quantities of convolution layers in each encoder and each decoder are not limited, and output of each convolution layer of the first decoder and input of each convolution layer of the second encoder are not limited.

It should be understood that the network structure shown in FIG. 5 is used as an example for description. The second encoder may directly use the surround view and the aerial view as input alternatively, and replace the surround view with the output result of the first decoder. This is because in some cases, some information of the surround view may be lost due to problems such as noise and distortion in a transmission or storage process. In this case, the decoder may attempt to reconstruct original data. In addition, in some application scenarios, an output result of the decoder is a result obtained through noise reduction or data compression, the output result may be understood as a better surround view, and a format needed by the second decoder may be generated. Therefore, the surround view is compared with the output result of the first decoder, and using the output result of the first decoder may improve efficiency and precision of extracting the second feature.

It should be noted that, the first feature is an output result of the first encoder, the first feature may be a feature vector, and the second feature is an output result of the second decoder. A function of the decoder is to map a vector output by the encoder back to space of the input data. Therefore, the second feature may be a two-dimensional depth top view. Input data of the second encoder not only includes the aerial view, but also includes the output result of the first decoder. Therefore, in comparison with the aerial view, the two-dimensional depth top view additionally includes an image feature of the surround view, and a decision obtained through inference based on the feature is more accurate.

However, the two-dimensional depth top view used as the second feature is high-dimensional data, and the first feature, the navigation target, and the sensing information are low-dimensional data. Therefore, dimension reduction needs to be performed on the two-dimensional depth top view. Specifically, as shown in FIG. 5, the second feature is input into the third encoder, and an output result of the third encoder is a second feature obtained through the dimension reduction. Feature splicing and fusion may be performed on the feature, the first feature, the navigation target, and the sensing information to obtain a fusion result, inference is completed based on the fusion result to obtain the motion information and the angle information, and feature extraction and encoding are performed on the aerial view and the surround view, so that images, features, and sensing information in different formats can be fused and inferred, to avoid problems, such as poor model calculation efficiency and poor precision, caused by data from a plurality of different sources.

It should be understood that a connection may also be established between each convolution layer in the first encoder and each convolution layer in the second encoder. For example, a 2^{nd} convolution layer of the first encoder may be connected to a 2^{nd} last convolution layer of the second encoder, and a 3^{rd} convolution layer of the first encoder may be connected to a 3^{rd} last convolution layer of the second encoder. The rest may be deduced by analogy. Similarly, a connection may also be established between each convolution layer in the second encoder and each convolution layer in the second decoder, a connection may also be established between each convolution layer in the first encoder and each convolution layer in the first decoder, and a connection may also be established between each convolution layer in the third encoder and each convolution layer in a third decoder. Specifically, a network structure of each encoder and each decoder may be determined based on an actual application scenario. This is not limited in this application.

It should be noted that structures of the first encoder, the second encoder, and the third encoder may be the same or different, and structures of the first decoder, the second decoder, and the third decoder may be the same or different. For ease of understanding, FIG. 5 draws three encoders and decoders with same structures. However, this is not limited in this application.

Step S450: The processing apparatus 120 sends the angle information and the motion information to the motion apparatus 110. This step may be implemented by the inference unit 123 in the embodiment in FIG. 1.

In an embodiment, the angle information includes one or more target capture angles. A target capture angle in the angle information may be a specific value, or may be replaced with a noun. For details, refer to a related example in the embodiment in FIG. 1. A specific representation form of the capture angle is not limited in this application.

Optionally, the angle information further includes a correspondence between a capture order and the target capture angle. Refer to the foregoing content. It can be learned that the image sensor may continuously change the capture angle to obtain a plurality of images. Therefore, the one or more target capture angles output herein may be a plurality of capture angles that are continuously changed by the image sensor, or one or more of the plurality of capture angles that are continuously changed. Therefore, the angle information may further include the correspondence between the capture order and the target capture angle.

In an embodiment, the motion information may include a navigation route, a movement direction, a movement speed, a movement acceleration, a movement angular velocity, and the like, and may further include other information needed to indicate device movement. This is not specifically limited in this application.

Step S460: The motion apparatus 110 adjusts the capture angle based on the angle information, and moves toward the navigation target based on the motion information. This step may be implemented by the capture unit 112 and the motion unit 111 in the embodiment in FIG. 1.

It should be noted that, when the plurality of images are captured for the first time, the images may be captured at a preset capture angle, and then the images may be captured at a capture angle adjusted based on the angle information. Refer to the foregoing content. It can be learned that the image sensor changes the capture angle of view by rotating the base to obtain the plurality of images. Therefore, adjusting the capture angle herein may be recording a target capture angle indicated in the angle information, so that when obtaining the plurality of images in the future, the image sensor captures the plurality of images at a plurality of target capture angles indicated by the angle information.

Optionally, when the angle information displays a case in which the capture angle of the image sensor needs to be adjusted, a moving object carrying the image sensor may move toward the navigation target at a preset speed, and after adjustment of capture scheduling is completed, move at a movement speed in the motion information. The preset speed may be a low speed that can ensure image capturing quality, to improve capture quality of the plurality of images.

Optionally, the environment information may be periodically collected and periodically received, and inference is performed on the environment information, to obtain the angle information and the motion information. The angle information and the motion information are periodically received, and the angle information and the motion information are processed. Therefore, generated motion information may be angle information and motion information in the periodicity. As the environment information is periodically collected, the generated motion information may be continuously changed. For example, the navigation route may be continuously adjusted to achieve a purpose of real-time navigation, thereby improving stability of the solution.

For example, if an image captured in a first periodicity is a first image, and an image captured in a second periodicity is a second image, a plurality of first images may be captured first in the first periodicity, where the plurality of first images are a plurality of images obtained by photographing a first scene by the image sensor from different capture angles. Then a first aerial view and a first surround view of the first scene are determined based on the plurality of first images, and then first angle information and first motion information are determined based on the first aerial view, the first surround view, and the navigation target.

Then, a plurality of second images are captured in the second periodicity, where the plurality of second images are a plurality of images obtained by photographing a second scene by using a capture angle indicated by the first angle information, a second aerial view and a second surround view of the second scene are determined based on the plurality of second images, and then second angle information and second motion information are determined based on the second aerial view, the second surround view, and the navigation target. The rest may be deduced by analogy, until the device reaches a location indicated by the navigation target.

Step S470: Obtain the plurality of pieces of environment information based on an adjusted capture angle. This step may be implemented by the capture unit 112 in the embodiment in FIG. 1.

It should be noted that the adjusted capture angle may be a plurality of angles, to obtain a plurality of images at a plurality of angles of view. Further, after step S470 is performed, step S420 may be performed to send a plurality of pieces of newly collected environment information to the processing apparatus 120 for processing. The processing apparatus 120 may perform step S430 to step S450, generate angle information and motion information, and feed back the angle information and the motion information to the motion apparatus 110. The motion apparatus 110 may adjust the capture angle of the image sensor based on the new angle information, and then obtain the plurality of pieces of environment information by using a new capture angle. Step S420 to Step S470 are repeatedly performed, until the device on which the motion apparatus 110 is located reaches the location indicated by the navigation target.

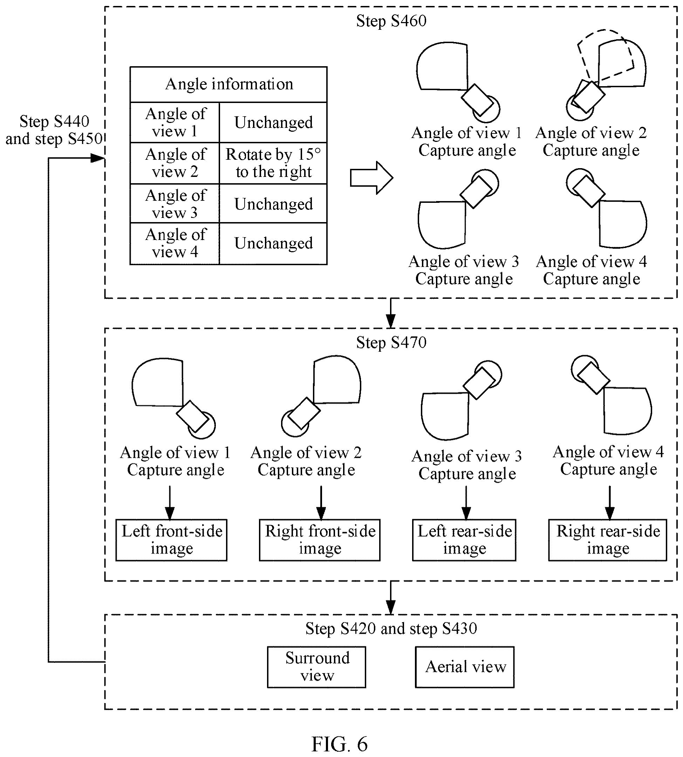

For example, FIG. 6 is a schematic flowchart of steps of adjusting a capture angle of view in a navigation method according to this application. After receiving the angle information and the motion information, the motion apparatus 110 may perform step S460 to change the capture angle of view of the image sensor based on the angle information. An angle of view 1, an angle of view 3, and an angle of view 4 do not need to be adjusted, and an angle of view 2 needs to rotate rightward by 15 degrees. Therefore, capture angles of the angle of view 1 to the angle of view 4 are recorded based on the angle information.

When step S470 is performed, the image sensor rotates based on the plurality of capture angles indicated by the angle information, to capture a plurality of images. For example, in FIG. 6, four angles of view are used as an example for description. An image captured at the angle of view 1 is a left front-side image, an image captured at the angle of view 2 is a right front-side image, an image captured at the angle of view 3 is a left rear-side image, and an image captured at the angle of view 4 is a right rear-side image. FIG. 6 is used as an example for description. A quantity of the plurality of images and a range of angle scanning are not limited in this application.

After step S470 is performed, step S420 and step S430 may be performed, to generate the surround view and the aerial view based on the plurality of images, generate new angle information and motion information based on the surround view, the aerial view, and the navigation target, and then capture a plurality of new images by using a capture angle indicated by the new angle information. The rest may be deduced by analogy, until the device on which the motion apparatus 110 is located reaches the location indicated by the navigation target.

In conclusion, in the navigation method provided in this application, a plurality of images at different capture angles are obtained by rotating the image sensor, the aerial view and the surround view are obtained based on the plurality of images, then the angle information and the motion information are determined based on the aerial view, the surround view, and the navigation target, a subsequent capture angle of the image sensor is adjusted based on the angle information, and a device on which the navigation system is located is indicated, based on the motion information, to move toward the navigation target, so that the image sensor can continue to capture a new image based on an adjusted capture angle, to obtain new capture angle information and new motion information. The rest may be deduced by analogy, until the location indicated by the navigation target is reached. A map does not need to be loaded in advance in an entire navigation process, memory resources are saved, and flexibility is high. In addition, the navigation system can sense all-round environment information from front, rear, left, right, and top view angles and the like, and the device can directly find the navigation path, to avoid the problems of repeated exploration, collision, and low efficiency.

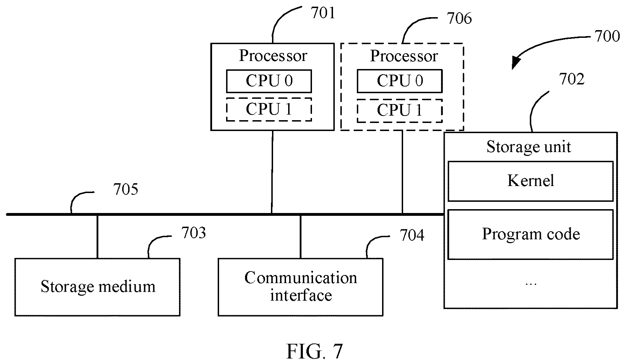

FIG. 7 is a diagram of a structure of a computing device according to this application. The computing device 700 may be the navigation system in the foregoing content. The navigation system may be deployed in a computing device that has a computing capability and a mobility requirement, for example, a mobile robot, a vehicle, an uncrewed aerial vehicle, or a smart home appliance. The mobile robot is a robot that can move in an environment, and may include a tracked/wheeled mobile mechanical apparatus, for example, a logistics robot, an agricultural robot, a patrol robot, or a voice guide robot. The vehicle may include a self-driving vehicle, and the smart home appliance may include a robotic vacuum cleaner. Examples are not described herein one by one.

Further, the computing device 700 includes a processor 701, a storage unit 702, a storage medium 703, and a communication interface 704. The processor 701, the storage unit 702, the storage medium 703, and the communication interface 704 communicate with each other through a bus 705, or communicate with each other by using another means such as wireless transmission.

The processor 701 may include any one or more of the following: processors such as a central processing unit (central processing unit, CPU), a microprocessor (microprocessor, MP), or a digital signal processor (digital signal processor, DSP),
for example, a CPU, an NPU, or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 701 executes various types of digital storage instructions, for example, a software or firmware program stored in the storage unit 702, so that the computing device 700 can provide a plurality of services of a wide range.

In a specific implementation, in an embodiment, the processor 701 includes one or more CPUs, for example, a CPU 0 and a CPU 1 that are shown in FIG. 7.

In a specific implementation, in an embodiment, the computing device 700 also includes a plurality of processors, for example, the processor 701 and a processor 706 that are shown in FIG. 7. Each of the processors may be a single-core (single-CPU) processor, or may be a multi-core (multi-CPU) processor. The processor herein means one or more devices, circuits, and/or processing cores configured to process data (for example, computer program instructions).

The storage unit 702 is configured to store program code, and the processor 701 controls execution of the program code, to perform processing steps of the navigation system in any one of the embodiments in FIG. 1 to FIG. 6. The program code includes one or more software units. The one or more software units are a capture unit, a motion unit, an image processing unit, a feature extraction unit, and an inference unit in the embodiment in FIG. 1. The capture unit is configured to obtain a plurality of first images. The image processing unit is configured to determine a first aerial view and a first surround view based on the plurality of first images. The feature extraction unit is configured to generate a first feature and a second feature based on the first aerial view and the first surround view. The inference unit is configured to determine first angle information and first motion information based on the first feature, the second feature, and a navigation target. The capture unit is configured to obtain a plurality of second images based on a plurality of target capture angles indicated by the first angle information. The motion unit is configured to move toward the navigation target based on the first motion information. Specifically, the capture unit is configured to perform step S410, step S420, and optional steps thereof in the embodiment in FIG. 4. The image processing unit is configured to perform step S430 and an optional step thereof in the embodiment in FIG. 4. The feature extraction unit and the inference unit are configured to perform step S440 and an optional step thereof in the embodiment in FIG. 4. The inference unit is further configured to perform step S450 and an optional step thereof in the embodiment in FIG. 4. The capture unit and the motion unit are further configured to perform step S460, step S470, and optional steps thereof in the embodiment in FIG. 4. Details are not described herein again.

The storage unit 702 includes a read-only memory and a random access memory, and provides instructions and data for the processor 701. The storage unit 702 further includes a non-volatile random access memory. The storage unit 702 is a volatile memory or a non-volatile memory, or includes both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. By way of example but not limitative description, many forms of RAMs are used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM), or a hard disk (hard disk), a USB flash drive (universal serial bus, USB), a flash memory (flash), an SD card (secure digital memory card, SD card), a memory stick, or the like. The hard disk is a hard disk drive (hard disk drive, HDD), a solid state disk (solid state disk, SSD), a mechanical hard disk (mechanical hard disk, HDD), or the like. This is not specifically limited in this application.

The storage medium 703 is a carrier for storing data, for example, a hard disk (hard disk), a USB flash drive (universal serial bus, USB), a flash memory (flash), an SD card (secure digital memory card, SD card), or a memory stick. The hard disk may be a hard disk drive (hard disk drive, HDD), a solid state disk (solid state disk, SSD), a mechanical hard disk (mechanical hard disk, HDD), or the like. This is not specifically limited in this application.

The communication interface 704 may be configured to provide information input or output for the processor 701. Alternatively, the communication interface 704 may be configured to: receive data sent externally and/or send data to the outside. The communication interface 704 may be a wired interface such as an ethernet cable, or may be a wireless interface (for example, Wi-Fi, Bluetooth, or universal wireless transmission). Alternatively, the communication interface 704 may further include a transmitter (for example, a radio frequency transmitter or an antenna) coupled to an interface, or a receiver.

The bus 705 is a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 705 is classified into an address bus, a data bus, a control bus, and the like. In addition to the data bus, the bus 705 further includes a power bus, a control bus, a status signal bus, and the like. However, for clarity of description, various buses are marked as the bus 705 in the figure.

It should be noted that FIG. 7 is merely a possible implementation of this embodiment of this application. In an actual application, the computing device 700 may alternatively include more or fewer components. This is not limited herein. For content that is not shown or not described in this embodiment of this application, refer to related descriptions in the embodiments in FIG. 1 to FIG. 6. Details are not described herein again.

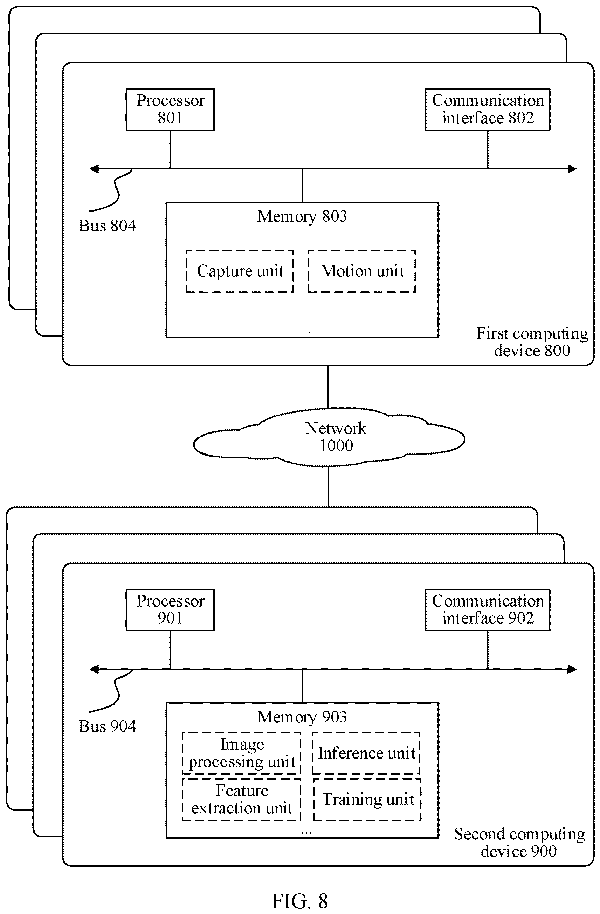

FIG. 8 is a diagram of a structure of a computing device cluster according to this application. The computing device cluster includes one or more first computing devices 800 and one or more second computing devices 900. A communication connection is established between the first computing device 800 and the second computing device 900 via a network 1000. The motion apparatus 110 in the foregoing content may be deployed on the first computing device 800, and the processing apparatus 120 in the foregoing content may be deployed on the second computing device 900. The first computing device 800 may be a computing device having a mobility requirement, for example, a mobile robot, a vehicle, an uncrewed aerial vehicle, or a smart home appliance. The second computing device 900 may be a computing device having a computing function, for example, a BMS, a virtual machine, a container, an edge server, or a terminal device. The network 1000 may be a wired network or a wireless network. This is not specifically limited in this application.

As shown in FIG. 8, a memory 803 in each first computing device 800 may store a same instruction that needs to be executed by the motion apparatus 110 in the navigation method. The instruction may implement one or more software units. The foregoing one or more software units are the capture unit and the motion unit in the embodiment in FIG. 1. Specifically, the capture unit is configured to obtain a plurality of first images, the image processing unit is configured to: determine a first aerial view and a first surround view based on the plurality of first images, and send the first aerial view and the first surround view to the second computing device 900, and is further configured to: receive first angle information and first motion information that are sent by the second computing device 900, and obtain a plurality of second images based on a plurality of target capture angles indicated by the first angle information. The motion unit is configured to move toward a navigation target based on the first motion information, specifically, the capture unit is configured to perform step S410, step S420, and optional steps thereof in the embodiment in FIG. 4. The capture unit and the motion unit are further configured to perform step S460, step S470, and optional steps thereof in the embodiment in FIG. 4. Details are not described herein again.

A memory 903 in each second computing device 900 may store a same instruction that needs to be executed by the processing apparatus 120 in the navigation method. The instruction may implement one or more software units. The one or more software units are the image processing unit, the feature extraction unit, the inference unit, and the training unit in the embodiment in FIG. 1. The image processing unit is configured to determine a first aerial view and a first surround view based on a plurality of first images. The feature extraction unit is configured to generate a first feature and a second feature based on the first aerial view and the first surround view. The inference unit is configured to determine first angle information and first motion information based on the first feature, the second feature, and the navigation target. The training unit is configured to train a network model needed when the feature extraction unit and the inference unit work. Specifically, the image processing unit is configured to perform step S430 and an optional step thereof in the embodiment in FIG. 4, the feature extraction unit and the inference unit are configured to perform step S440 and an optional step thereof in the embodiment in FIG. 4, and the inference unit is further configured to perform step S450 and an optional step thereof in the embodiment in FIG. 4. Details are not described herein again.

The first computing device 800 includes a processor 801, a communication interface 802, a memory 803, and a bus 804. The second computing device 900 includes a processor 901, a communication interface 902, a memory 803, and a bus 804. For further descriptions of the processor 801, the communication interface 802, the memory 803, the bus 804, the processor 901, the communication interface 902, the memory 903, and the bus 904, refer to descriptions of the processor 701, the processor 701, the storage unit 702, the storage medium 703, the communication interface 704, and the bus 705 in the embodiment in FIG. 7. Details are not described herein again.

In the implementation shown in FIG. 7, each first computing device 800 in the computing cluster may establish a communication connection to one second computing device 900, in other words, a plurality of images captured by each first computing device 800 are handed over to a corresponding second computing device 900 for processing. In another possible implementation, each first computing device 800 may establish connections to a plurality of second computing devices 900, in other words, a plurality of images captured by each first computing device 800 are handed over to the plurality of corresponding second computing devices 900 for processing.

FIG. 8 is a diagram of another structure of a computing device cluster according to this application. In an implementation shown in FIG. 8, memories 903 in different second computing devices 900 may alternatively store different instructions, and the instructions are respectively used to perform some functions of the processing apparatus 120 in the navigation system. In other words, instructions stored in the memories 903 in different second computing devices 900 may be combined to implement the image processing unit, the feature extraction unit, the inference unit, and the training unit. One or more second computing devices 900 may establish a communication connection by using an external network or an internal network.

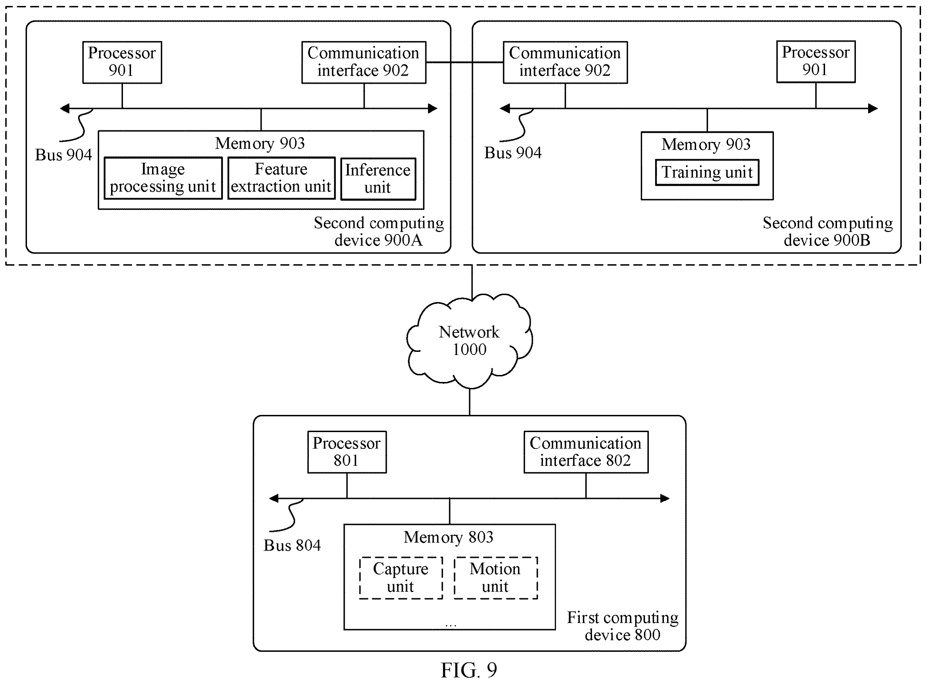

As shown in FIG. 9, a second computing device 900A and a second computing device 900B are connected via a network. Specifically, the computing devices are connected to the network through communication interfaces of the computing devices. In this type of possible implementation, a memory 903 in the second computing device 900A stores instructions for performing functions of the image processing unit, the feature extraction unit, and the inference unit. In addition, a memory 903 in the second computing device 900B stores instructions for performing a function of the training unit. For function descriptions of the units, refer to the embodiment in FIG. 8. Details are not described herein again.

It should be noted that the implementation shown in FIG. 9 may be an implementation when a processing capability of the second computing device 900A is insufficient, or storage space of the second computing device 900A is insufficient, or may be an implementation in another service scenario. This is not specifically limited in this application.

Embodiment of this application further provides a computer program product including instructions. The computer program product may be a software or program product that includes instructions and that can be run on a computing device or stored in any usable medium. When the computer program product is run on the computing device or the computing device cluster, the computing device or the computing device cluster is enabled to perform the navigation method.

Embodiments of this application further provide a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instruction instructs the computing device to perform a navigation method, or instructs the computing device cluster to perform a navigation method.

All or some of the foregoing embodiments may be implemented by using software, hardware, firmware, or any combination thereof. When the software is used to implement the embodiments, the foregoing embodiments may be implemented completely or partially in a form of a computer program product. The computer program product includes a plurality of computer instructions. When the computer program instructions are loaded and executed on a computer, procedure or functions according to embodiments of the present invention are all or partially generated. A computer may be a general-purpose computer, a dedicated computer, a computer network, or another programmable apparatus. The computer instructions may be stored in a computer-readable storage medium, or may be transmitted from one computer-readable storage medium to another computer-readable storage medium.

The foregoing descriptions are merely specific implementations of the present invention, but are not intended to limit the protection scope of the present invention. Various equivalent modifications or replacements may be readily figured out by a person skilled in the art within the technical scope disclosed in the present invention, and all these modifications or replacements shall fall within the protection scope of the present invention. Therefore, the protection scope of the present invention shall be subject to the protection scope of the claims.

## Claims

1. A navigation method, wherein the method is applied to a navigation system, the navigation system comprises a motion apparatus and a processing apparatus, and the method comprises:
obtaining, by the motion apparatus, a plurality of first images, wherein the plurality of first images are a plurality of images obtained when the motion apparatus indicates an image sensor to photograph a first scene from a plurality of capture angles;
determining, by the processing apparatus, a first aerial view and a first surround view of the first scene based on the plurality of first images; and
determining, by the processing apparatus, first angle information and first motion information based on the first aerial view, the first surround view, and a navigation target, wherein the first angle information indicates the image sensor to adjust a capture angle, and the first motion information indicates a device on which the motion apparatus is located to move toward the navigation target.

2. The method according to claim 1, wherein the plurality of first images are a plurality of images obtained by changing the capture angle by the image sensor, and the image sensor rotates with the device to change the capture angle; or the device comprises a base, and the image sensor rotates with the base to change the capture angle.

3. The method according to claim 1 or 2, wherein the determining, by the processing apparatus, first angle information and first motion information based on the first aerial view, the first surround view, and a navigation target comprises:
inputting, by the processing apparatus, the first surround view and the first aerial view into a navigation model, to obtain the first angle information and the first motion information, wherein the navigation model comprises a feature extraction network and an inference network, the feature extraction network comprises a first network and a second network, the first network is configured to generate a first feature based on the first surround view, the second network is configured to generate a second feature based on the first surround view and the first aerial view, the inference network is configured to obtain the first angle information and the first motion information based on the first feature, the second feature, and the navigation target.

4. The method according to claim 3, wherein the first network comprises a first encoder of a first autoencoder network, input data of the first encoder comprises the first surround view, and the first feature is an output result of the first encoder; and the second network comprises a decoder of the first autoencoder network, an encoder of a second autoencoder network, and a decoder of the second autoencoder network, the second feature is an output result of the second decoder, and input data of the second network comprises the first feature and the first aerial view.

5. The method according to claim 4, wherein in the second network, an output end of the first decoder is connected to an input end of the second encoder, an output end of the second encoder is connected to an input end of the second decoder, input data of the first decoder comprises the first feature, and input data of the second encoder comprises an output result of the first decoder and the first aerial view.

6. The method according to claim 5, wherein the first decoder comprises a plurality of first convolution layers, the second encoder comprises a plurality of second convolution layers, and output results of the first convolution layers are sequentially input into the second convolution layers in a sequence of convolution layers.

7. The method according to any one of claims 1 to 6, wherein the determining, by the processing apparatus, first angle information and first motion information based on the first aerial view, the first surround view, and a navigation target comprises:
determining, by the processing apparatus, the first angle information and the first motion information based on the first aerial view, the first surround view, the navigation target, and sensing information, wherein the sensing information comprises information collected by another sensor different from the image sensor, and the another sensor comprises one or more of a location sensor, an acceleration sensor, a gyroscope sensor, a geomagnetic sensor, an infrared sensor, an IMU, an odometer, an angular velocity sensor, or a linear velocity sensor.

8. The method according to any one of claims 1 to 7, wherein the first motion information comprises a movement speed, and the method further comprises:
when adjusting the capture angle of the image sensor based on the first angle information, moving, by the motion apparatus, toward the navigation target at a preset speed; and
when the capture angle of the image sensor does not need to be adjusted, moving, by the motion apparatus, toward the navigation target at the movement speed.

9. The method according to any one of claims 1 to 8, wherein the method further comprises:
indicating, by the motion apparatus, the image sensor to capture a plurality of second images, wherein the plurality of second images are a plurality of images obtained by photographing a second scene by using one or more target capture angles indicated by the first angle information;
determining, by the processing apparatus, a second aerial view and a second surround view of the second scene based on the plurality of second images; and
determining, by the processing apparatus, second angle information and second motion information based on the second aerial view, the second surround view, and the navigation target, wherein the second angle information indicates the image sensor to adjust the capture angle, and the second motion information indicates the device on which the motion apparatus is located to move toward the navigation target.

10. The method according to any one of claims 1 to 9, wherein the motion apparatus and the processing apparatus are deployed on a same computing device, and the computing device comprises any one of a self-driving vehicle, an uncrewed aerial vehicle, a mobile robot, or a movable smart home appliance; or
the motion apparatus is deployed on a first computing device, and the first computing device comprises any one of a self-driving vehicle, an uncrewed aerial vehicle, a mobile robot, or a movable smart home appliance; and
the processing apparatus is deployed on a second computing device, and the second computing device comprises any one of a virtual machine, a bare metal server, or a container.

11. A motion apparatus, wherein the motion apparatus is used in a navigation system, the navigation system comprises the motion apparatus and a processing apparatus, and the motion apparatus comprises:
a capture unit, configured to obtain a plurality of first images, wherein the plurality of first images are a plurality of images obtained by photographing a first scene by an image sensor from a plurality of capture angles, wherein
the capture unit is configured to send the plurality of first images to the processing apparatus; and
the capture unit is configured to: receive first angle information sent by the processing apparatus, and indicate, based on the first angle information, the image sensor to adjust a capture angle based on the first angle information; and
a motion unit, configured to: receive first motion information sent by the processing apparatus, and indicate, based on the first motion information, a device on which the motion apparatus is located to move toward the navigation target.

12. The motion apparatus according to claim 11, wherein the plurality of first images are a plurality of images obtained by changing the capture angle by the image sensor, and the image sensor rotates with the device to change the capture angle; or the device comprises a base, and the image sensor rotates with the base to change the capture angle.

13. The motion apparatus according to claim 11 or 12, wherein the first motion information comprises a movement speed;
the motion unit is configured to: when adjusting the capture angle of the image sensor based on the first angle information, move toward the navigation target at a preset speed; and
the motion unit is configured to: when the capture angle of the image sensor does not need to be adjusted, move toward the navigation target at the movement speed.

14. The motion apparatus according to any one of claims 11 to 13, wherein
the capture unit is further configured to indicate the image sensor to capture a plurality of second images, wherein the plurality of second images are a plurality of images obtained by photographing a second scene by using one or more target capture angles indicated by the first angle information;
the capture unit is configured to send the plurality of second images to the processing apparatus;
the capture unit is configured to: receive second angle information sent by the processing apparatus, and indicate, based on the second angle information, the image sensor to adjust the capture angle based on the second angle information; and
the motion unit is configured to: receive second motion information sent by the processing apparatus, and indicate, based on the second motion information, the device on which the motion apparatus is located to move toward the navigation target.

15. The motion apparatus according to any one of claims 11 to 14, wherein the motion apparatus and the processing apparatus are deployed on a same computing device, and the computing device comprises any one of a self-driving vehicle, an uncrewed aerial vehicle, a mobile robot, or a movable smart home appliance; or
the motion apparatus is deployed on a first computing device, and the first computing device comprises any one of a self-driving vehicle, an uncrewed aerial vehicle, a mobile robot, or a movable smart home appliance; and
the processing apparatus is deployed on a second computing device, and the second computing device comprises any one of a virtual machine, a bare metal server, or a container.

16. A processing apparatus, wherein the processing apparatus is used in a navigation system, the navigation system comprises the processing apparatus and a motion apparatus, and the processing apparatus comprises:
an image processing unit, configured to receive a plurality of first images sent by the motion apparatus, wherein the plurality of first images are a plurality of images obtained when the motion apparatus indicates an image sensor to photograph a first scene from a plurality of capture angles, wherein
the image processing unit is further configured to determine a first aerial view and a first surround view of the first scene based on the plurality of first images; and
a navigation unit, configured to: determine first angle information and first motion information based on the first aerial view, the first surround view, and a navigation target, and send the first angle information and the first motion information to the motion apparatus, wherein the first angle information indicates the image sensor to adjust a capture angle, and the first motion information indicates a device on which the motion apparatus is located to move toward the navigation target.

17. The processing apparatus according to claim 16, wherein the plurality of first images are a plurality of images obtained by changing the capture angle by the image sensor, and the image sensor rotates with the device to change the capture angle; or the device comprises a base, and the image sensor rotates with the base to change the capture angle.

18. The processing apparatus according to claim 16 or 17, wherein the navigation unit is configured to input the first surround view and the first aerial view into a navigation model, to obtain the first angle information and the first motion information, wherein the navigation model comprises a feature extraction network and an inference network, the feature extraction network comprises a first network and a second network, the first network is configured to generate a first feature based on the first surround view, the second network is configured to generate a second feature based on the first surround view and the first aerial view, the inference network is configured to obtain the first angle information and the first motion information based on the first feature, the second feature, and the navigation target.

19. The processing apparatus according to claim 18, wherein the first network comprises a first encoder of a first autoencoder network, input data of the first encoder comprises the first surround view, and the first feature is an output result of the first encoder; and the second network comprises a decoder of the first autoencoder network, an encoder of a second autoencoder network, and a decoder of the second autoencoder network, the second feature is an output result of the second decoder, and input data of the second network comprises the first feature and the first aerial view.

20. The processing apparatus according to claim 19, wherein in the second network, an output end of the first decoder is connected to an input end of the second encoder, an output end of the second encoder is connected to an input end of the second decoder, input data of the first decoder comprises the first feature, and input data of the second encoder comprises an output result of the first decoder and the first aerial view.

21. The processing apparatus according to claim 20, wherein the first decoder comprises a plurality of first convolution layers, the second encoder comprises a plurality of second convolution layers, and output results of the first convolution layers are sequentially input into the second convolution layers in a sequence of convolution layers.

22. The processing apparatus according to any one of claims 16 to 21, wherein the navigation unit is configured to determine the first angle information and the first motion information based on the first aerial view, the first surround view, the navigation target, and sensing information, wherein the sensing information comprises information collected by another sensor different from the image sensor, and the another sensor comprises one or more of a location sensor, an acceleration sensor, a gyroscope sensor, a geomagnetic sensor, an infrared sensor, an IMU, an odometer, an angular velocity sensor, or a linear velocity sensor.

23. The processing apparatus according to any one of claims 16 to 22, wherein
the image processing unit is configured to receive a plurality of second images sent by the motion apparatus, wherein the plurality of second images are a plurality of images obtained by photographing a second scene by using one or more target capture angles indicated by the first angle information;
the image processing unit is further configured to determine a second aerial view and a second surround view of the second scene based on the plurality of second images; and
the navigation unit is configured to: determine second angle information and second motion information based on the second aerial view, the second surround view, and the navigation target, and send the second angle information and the second motion information to the motion apparatus, wherein the second angle information indicates the image sensor to adjust the capture angle, and the second motion information indicates the device on which the motion apparatus is located to move toward the navigation target.

24. The processing apparatus according to any one of claims 16 to 23, wherein
the motion apparatus and the processing apparatus are deployed on a same computing device, and the computing device comprises any one of a self-driving vehicle, an uncrewed aerial vehicle, a mobile robot, or a movable smart home appliance; or
the motion apparatus is deployed on a first computing device, and the first computing device comprises any one of a self-driving vehicle, an uncrewed aerial vehicle, a mobile robot, or a movable smart home appliance; and
the processing apparatus is deployed on a second computing device, and the second computing device comprises any one of a virtual machine, a bare metal server, or a container.

25. A navigation system, wherein the system comprises a motion apparatus and a processing apparatus, the motion apparatus implements functions implemented by the unit module described in any one of claims 11 to 15, and the processing apparatus implements functions implemented by the unit module described in any one of claims 16 to 24.

26. A computing device, comprising a processor and a memory, wherein the memory is configured to store code, and the processor is configured to execute the code to implement the method according to any one of claims 1 to 10.

27. A computing device cluster, comprising at least one first computing device and at least one second computing device, wherein
each first computing device comprises a first processor and a first memory, the first memory is configured to store first code, and the first processor is configured to execute the first code to implement the unit module described in any one of claims 11 to 15; and
each second computing device comprises a second processor and a second memory, the second memory is configured to store second code, and the second processor is configured to execute the second code to implement the unit module described in any one of claims 16 to 24.

28. A computer-readable storage medium, wherein the computer-readable storage medium stores instructions, and when the instructions are run by a computing device or a computing device cluster, the method according to any one of claims 1 to 10 is implemented.
